# FASCICULE DE BREVET EUROPEEN

(11) **EP 3 820 812 B1**
(45) Date de publication et mention de la délivrance du brevet: **06.05.2026**
(21) Numéro de dépôt: 19782656.3
(22) Date de dépôt: 20.08.2019
(51) Int. Cl.: C01B 32/162, H01G 11/36, H01G 11/24, H01G 11/28, H01G 11/86

(54) **PROCÉDÉ DE CROISSANCE DE NANOTUBES DE CARBONE EN SURFACE ET DANS LE VOLUME D'UN SUBSTRAT CARBONÉ POREUX ET UTILISATION POUR PRÉPARER UNE ÉLECTRODE**
VERFAHREN ZUM ZÜCHTEN VON KOHLENSTOFFNANORÖHREN AUF DER OBERFLÄCHE UND IM KÖRPER EINES PORÖSEN KOHLENSTOFFHALTIGEN SUBSTRATS UND VERWENDUNG ZUR HERSTELLUNG EINER ELEKTRODE
METHOD FOR GROWING CARBON NANOTUBES ON THE SURFACE AND IN THE BODY OF A POROUS CARBONACEOUS SUBSTRATE AND USE FOR PREPARING AN ELECTRODE

(30) Priorité: 21.08.2018 FR 1857575
(43) Date de publication de la demande: 19.05.2021
(73) Titulaire: Nawah, 13790 Rousset (FR); Commissariat à l'Energie Atomique et aux Energies Alternatives, 75015 Paris (FR); CY Cergy Paris Université, 95011 Cergy-Pontoise Cedex (FR); Université de Tours, 37020 Tours Cedex 1 (FR)
(72) Inventeur: AUBERT, Pierre-Henri, 95520 OSNY (FR); BANET, Philippe, 78260 ACHERES (FR); BOISSET, Aurélien, 13120 GARDANNE (FR); DARCHY, Léa, 13850 GREASQUE (FR); DESCARPENTRIES, Jérémie, 91190 GIF SUR YVETTE (FR); GHAMOUSS, Fouad, 37300 JOUES LES TOURS (FR); HAUF, Harald, 83500 LA SEYNE SUR MER (FR); MAYNE, Martine, 91470 LES MOLIERES (FR); PINAULT, Mathieu, 94260 FRESNES (FR); TRAN VAN, François, 37230 FONDETTES (FR)
(74) Mandataire: Santarelli
(86) Numéro de dépôt international: PCT/FR2019/051941
(87) Numéro de publication internationale: WO 2020/039145

(56) Documents cités:
- EP-A2- 1 966 286
- WO-A1-2015/071408
- WO-A2-2009/103925
- US-A1- 2011 318 256
- SHAGHAYEGH FARAJI ET AL: "Modifying the morphology and properties of aligned CNT foams through secondary CNT growth", NANOTECHNOLOGY, IOP, BRISTOL, GB, vol. 29, no. 29, 16 May 2018 (2018-05-16), pages 295602, XP020328781, ISSN: 0957-4484, [retrieved on 20180516], DOI: 10.1088/1361-6528/AAC03C
- FENG AN ET AL: "Preparation of vertically aligned carbon nanotube arrays grown onto carbon fiber fabric and evaluating its wettability on effect of composite", APPLIED SURFACE SCIENCE, ELSEVIER, AMSTERDAM, NL, vol. 258, no. 3, 1 September 2011 (2011-09-01), pages 1069 - 1076, XP028334304, ISSN: 0169-4332, [retrieved on 20110908], DOI: 10.1016/J.APSUSC.2011.09.003
- PENG LV ET AL: "Vertically aligned carbon nanotubes grown on carbon fabric with high rate capability for super-capacitors", SYNTHETIC METALS, ELSEVIER SEQUOIA, LAUSANNE, CH, vol. 162, no. 13, 25 April 2012 (2012-04-25), pages 1090 - 1096, XP028498599, ISSN: 0379-6779, [retrieved on 20120503], DOI: 10.1016/J.SYNTHMET.2012.04.029
- MARCUS A. WORSLEY ET AL: "High surface area carbon aerogels as porous substrates for direct growth of carbon nanotubes", CHEMICAL COMMUNICATIONS, vol. 46, no. 48, 1 January 2010 (2010-01-01), pages 9253 - 9255, XP055594088, ISSN: 1359-7345, DOI: 10.1039/c0cc03457f
- MURAKAMI YOICHI ET AL: "Growth of vertically aligned single-walled carbon nanotube films on quartz substrates and their optical anisotropy", CHEMICAL PHYSICS LETTERS, ELSEVIER BV, NL, vol. 385, no. 3-4, 9 February 2004 (2004-02-09), pages 298 - 303, XP002579404, ISSN: 0009-2614, [retrieved on 20040122], DOI: 10.1016/J.CPLETT.2003.12.095
- ROSEANNE WARREN ET AL: "Electrochemically synthesized and vertically aligned carbon nanotube-polypyrrole nanolayers for high energy storage devices", SENSORS AND ACTUATORS A: PHYSICAL, vol. 231, 1 July 2015 (2015-07-01), NL, pages 65 - 73, XP055407911, ISSN: 0924-4247, DOI: 10.1016/j.sna.2014.07.010

## Description

### DOMAINE TECHNIQUE

La présente invention appartient au domaine des dispositifs de stockage et de restitution d'énergie électrique et, en particulier, au domaine des électrodes notamment utiles pour des supercondensateurs.

Plus particulièrement, la présente invention propose une électrode présentant (i) un support en un matériau carboné poreux, (ii) des nanotubes de carbone verticalement alignés (VACNT pour « Vertically Aligned Carbon Nanotubes ») sur ledit support et dans le volume dudit support et (iii) un polymère organique conducteur de l'électricité.

A cet effet, la présente invention concerne, tout d'abord, un procédé pour synthétiser par dépôt chimique en phase vapeur (CVD pour « Chemical Vapor Deposition ») à la surface et dans le volume d'un substrat carboné poreux, des nanotubes de carbone verticalement alignés (VACNT pour « Vertically Aligned Carbon Nanotubes »). La présente invention concerne le matériau composite ainsi obtenu et ses utilisations notamment pour la préparation d'une électrode telle que précédemment décrite.

### ÉTAT DE LA TECHNIQUE ANTÉRIEURE

Pour permettre l'essor des énergies renouvelables et la réduction des émissions de gaz, le stockage de l'électricité est l'un des plus grands défis à relever. Parmi les nombreuses sources autonomes, les supercondensateurs, basés sur des cycles rapides de charge/décharge d'ions sur des surfaces carbonées, se situent entre les condensateurs et les batteries. Leur efficacité de stockage élevée (> 95%), leur sécurité, leur fiabilité et leur durée de vie en font de bons candidats pour compléter ou remplacer les solutions existantes telles que, par exemple, batteries électrochimiques, volants ou stockage magnétique.

Les supercondensateurs dont le marché est en plein essor possèdent deux électrodes i.e. une anode et une cathode qui sont isolées électriquement par un séparateur, un électrolyte étant disposé entre chaque électrode et le séparateur.

L'un des paramètres important pour un supercondensateur est la capacitance du système qui, pour rappel, se définit comme la propriété d'un conducteur électrique à contenir un certain niveau de charge électrique pour un potentiel électrique déterminé. Cette dernière dépend principalement de la corrélation entre les matériaux choisis pour les électrodes, du design de ces électrodes et de l'électrolyte.

Parmi l'ensemble des matériaux étudiés, en particulier, tout matériau carboné poreux et possédant une conductivité électrique adaptée à leur utilisation en tant qu'électrode de supercondensateur peut être envisagé à la fois en tant que matériau actif et en tant que collecteur de courant. Par exemple, les tissus constitués de fibres de carbone sont des matériaux qui répondent à ses exigences.

L'utilisation de tissus de fibres de carbone en tant qu'électrode de supercondensateurs est largement étudiée et consiste à combiner le tissu de fibres de carbone avec un matériau pseudo-capacitif parmi lesquels les polymères conducteurs de l'électricité (PCE), essentiellement la polyaniline et le polypyrole (PPY). Ainsi, nous pouvons notamment citer les travaux de Ma *et al* qui déposent électrochimiquement du PPY à la surface de tissus de fibres de carbone ce qui confère une capacitance élevée à l'électrode : 3300 mF/cm² à 10m V/s dans l'acide sulfurique (H₂SO₄) (entre 0 et 1,6 V) **[1].** D'autres techniques de dépôt sont également mises en œuvre comme la polymérisation en phase vapeur de poly(3,4-éthylènedioxythiophène) (PEDOT) sur des tissus de fibres de carbone conférant à l'électrode des densités d'énergie et de puissance intéressantes **[2].** Au-delà de l'association entre tissus de fibres de carbone et polymères conducteurs, des oxydes métalliques comme, par exemple l'oxyde de manganèse (MnO₂), ont également été associés au tissu de fibres de carbone par électrodéposition anodique conférant, à l'électrode, une cyclabilité intéressante dans du sulfate de sodium (Na₂SO₄) **[3].**

L'intégration de nanostructures carbonées, notamment de nanotubes de carbone (NTC), à la surface du tissu de fibres de carbone a également fait l'objet de nombreux travaux tant pour des applications aux matériaux de structure ou aux matériaux multi-fonctionnels que pour des applications au stockage de l'énergie. Dans ce dernier cas, cette intégration permet de conférer à l'électrode une porosité nanométrique contrôlée, une surface spécifique plus élevée et une conductivité électrique qui ont des impacts bénéfiques sur les performances de l'électrode **[4].** L'intégration de nanotubes de carbone à la surface du tissu de fibres de carbone peut être réalisée de différentes manières : soit par dépôt d'une suspension de nanotubes en surface du tissu de fibres de carbone, soit par croissance directe par dépôt chimique en phase vapeur (CVD) des nanotubes sur tissu de fibres de carbone **[5,6].**

La voie de croissance directe par dépôt chimique en phase vapeur (CVD) des NTC présente un intérêt en termes de simplicité de préparation et de cohésion intime pour l'association entre le tissu de fibres de carbone et les nanotubes. Citons notamment les travaux de Lv *et al* qui sont focalisés sur la croissance de nanotubes verticalement alignés sur tissus de fibres de carbone pour des applications au stockage de l'énergie dans des supercondensateurs **[7].** Ces travaux mettent en évidence le contrôle du chargement en NTC par la durée de synthèse qui agit sur la longueur des NTC, sachant que les NTC sont essentiellement répartis en surface du tissu. Ce matériau présente des propriétés intéressantes en termes de cyclabilité en milieu aqueux et compétitives par rapport aux systèmes carbonés commerciaux. Les auteurs expliquent que ces propriétés sont liées à une architecture 3D hiérarchisée particulière présentant des tailles de mésopores élevées et des canaux au sein du réseau de NTC alignés facilitant la diffusion des ions de l'électrolyte.

Faraji et al (2018, Nanotechnology, vol. 29, 295602) décrit la préparation de nanotubes de carbone (CNT) dits CNT secondaires sur une mousse de CNT dits CNT primaires. Même si les CNT secondaires obtenus dans ce document sont présents non seulement en surface de la mousse de CNT mais aussi dans son volume, ces derniers ne se présentent pas comme des nanotubes de carbone verticalement alignés.

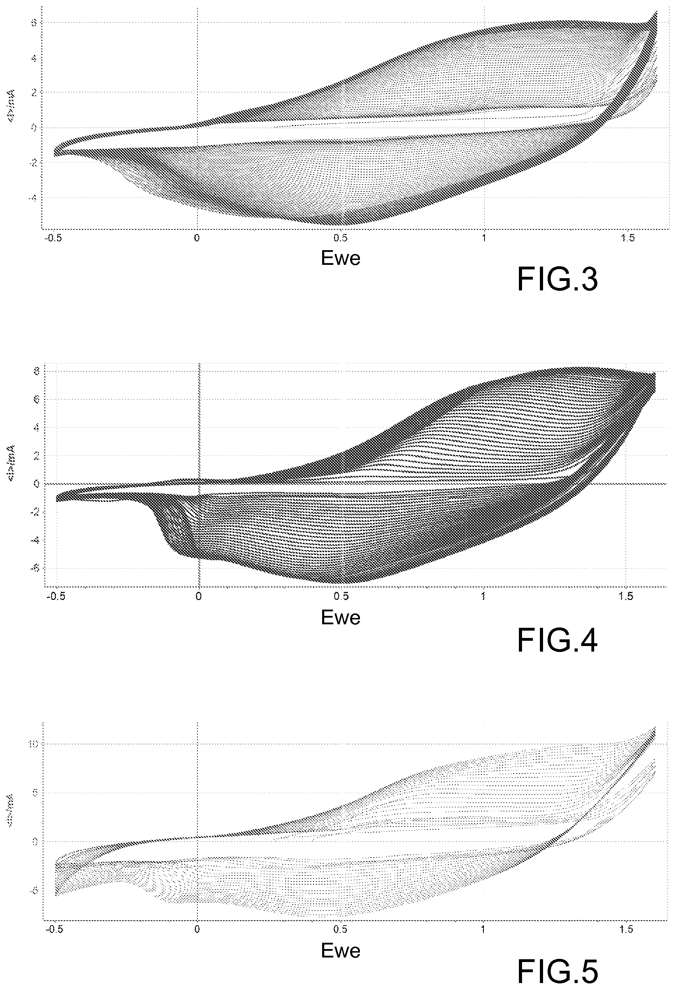

An et al (2011, Applied Surface Science, vol. 258, pages 1069-1076) propose un procédé pour synthétiser des VACNT sur un tissu de fibres de carbone. Une couche d'alumine est déposée sur ce tissu puis ce dernier est imprégné d'une solution de catalyseur à base de fer avant la synthèse des VACNT par CCVD pour « Combustion chemical vapor deposition » en utilisant de l'acéthylène comme source de carbone. Par ailleurs, il est expliqué, sur la base des Figures 4(c) et (d), que la couche d'alumine semble avoir empêché la diffusion des particules de catalyseur à base de fer dans le substrat poreux permettant ainsi d'obtenir des VACNT denses en surface de ce substrat (page 1072, colonne de droite, 1^{ère} ligne). Le matériau carboné poreux obtenu suite à cette synthèse ne comprend donc pas de VACNT dans son volume.

La demande internationale WO 2009/103925 propose un procédé de croissance de VACNT sur des substrats carbonés tels que des fibres de carbone ou sur des substrats métalliques dans un seul et même réacteur de croissance **[8].** Ce procédé comprend une première phase de dépôt d'une sous-couche de céramique suivie d'une seconde phase de dépôt de nanotubes de carbone sur ladite sous-couche. Il est clair de l'organisation des différents éléments du dispositif utilisé pour ce procédé et représenté à la Figure 15 de **[8]** que l'injection des précurseurs pulvérisés se fait de façon parallèle au plan du substrat. On parle d'une injection en « configuration horizontale ». Par ailleurs, même s'il est envisagé que la seconde étape du procédé puisse être réalisée à une pression inférieure à la pression atmosphérique, c'est une pression comprise entre 900 mbar (9.10⁴ Pa) et 1000 mbar (10⁵ Pa) qui est utilisée pour cette étape dans **[8].**

La demande internationale WO 2015/071408 concerne un procédé de fabrication en continu de nanostructures alignées comme des VACNT sur un support par dépôt chimique catalytique en phase vapeur **[9].** Dans cette demande, il est également envisagé que le procédé utilisé présente les deux étapes telles que décrites dans **[8],** le dépôt de la sous-couche de céramique étant réalisé dans une chambre de pré-traitement. Dans la demande internationale WO 2015/071408 **[9],** les précurseurs pulvérisés mis en œuvre lors du dépôt des nanostructures sont injectés selon une direction essentiellement perpendiculaire et de préférence perpendiculaire aux moyens de convoyage. En d'autres termes, la direction de l'injection est essentiellement perpendiculaire au plan du support. Tout comme pour **[8],** il est envisagé, dans **[9],** que la pression lors de la croissance des VACNT puisse être inférieure à la pression atmosphérique. Cependant, cette étape est réalisée à une pression comprise entre 900 mbar (9.10⁴ Pa) et 1000 mbar (10⁵ Pa). Par ailleurs, un support carboné poreux n'est nullement décrit comme utilisable dans **[9]** (voir de la page 24, ligne 27 à la page 25, ligne 4), tous les exemples réalisés mettant en œuvre un support en quartz.

Les architectures ci-dessus comportant un tissu de fibres de carbone recouvert par des nanotubes aléatoirement répartis ou verticalement alignés peuvent faire l'objet de supports pour le dépôt de matériaux pseudo-capacitifs tels que précédemment évoqués. En ce sens, deux façons de préparer ces matériaux sont reportées dans la littérature, à savoir : soit les NTC sont déposés initialement à la surface des fibres puis le dépôt du matériau pseudo-capacitif est réalisé, soit le matériau pseudo-capacitif est initialement déposé à la surface des fibres puis le dépôt des NTC est réalisé. La plupart des travaux intégrant cette démarche utilisent des nanotubes aléatoirement répartis en surface des tissus de fibres de carbone et même parfois du graphène. Citons notamment les travaux de Li et Chen qui rapportent des études sur l'ajout de NTC sur tissu préalablement recouvert de polyaniline mettant ainsi en évidence une électrode flexible présentant une capacitance élevée de 5611 mF/cm² à 1 mV/s et 3381 mF/cm² à 20 mV/s en milieu électrolytique aqueux (H₂SO₄) **[10].** Yesi *et al* ont mené des études sur la croissance de nanotubes aléatoirement répartis sur tissus de fibres de carbone suivi du dépôt de polypyrrole à 1430 mF/cm² à 20 mV/s dans H₂SO₄ **[11].** A noter que l'utilisation dans **[10]** et **[11]** d'un électrolyte aqueux acide a l'inconvénient de présenter une plage de potentiels étroite.

Au-delà de ces travaux, la demande de brevet CN 102354612 rapporte un concept différent pour lequel les nanotubes, verticalement alignés par rapport à la surface des tissus de fibres de carbone et obtenus par croissance directe par CVD, sont électrochimiquement recouverts de nanoparticules de MnO₂, matériau pseudo-capacitif **[12].** Ce matériau est composé d'un réseau conducteur et poreux présentant une surface spécifique importante, une excellente résistance mécanique et stabilité chimique, ce qui en fait un matériau idéal en tant qu'électrode de supercondensateur à haute performance. Toutefois ce matériau présente des tensions d'utilisation limitées et des cyclages possibles uniquement en milieu aqueux ou protonique.

Du fait de l'intérêt grandissant des supercondensateurs à matériau carboné poreux, les inventeurs se sont fixé pour but de proposer une électrode comprenant un tel matériau, réalisable via un procédé facilement industrialisable et présentant des propriétés intéressantes notamment en termes de capacitance et en particulier en termes de capacitance surfacique.

### EXPOSÉ DE L'INVENTION

La présente invention permet d'atteindre le but que se sont fixé les inventeurs puisque, grâce à leurs travaux, ces derniers ont pu montrer qu'il était possible d'améliorer encore, dès la synthèse des VACNT, les performances, notamment en terme de capacitance, d'électrodes à support en matériau carboné poreux présentant des VACNT et une matrice polymère organique conductrice de l'électricité.

En effet, par un choix judicieux des conditions opératoires utilisées lors de la synthèse des VACNT basée sur le procédé décrit dans **[8],** les inventeurs ont pu obtenir un support matériau carboné poreux qui présente des VACNT non seulement à sa surface mais aussi dans son volume. Les conditions opératoires sélectionnées par les inventeurs à savoir la pression à laquelle est réalisée la croissance des VACNT et l'orientation de l'injection des précurseurs nécessaires à cette croissance ont permis d'intégrer des VACNT à la surface du support en matériau carboné poreux et dans le volume de ce matériau. La présence de ces VACNT dans le volume du matériau génère une plus grande surface carbonée disponible pour le dépôt ultérieur du PCE, accroît la surface spécifique et maintient, voire accroît la conductivité électrique du matériau, ce qui entraîne des impacts bénéfiques sur les performances de l'électrode contenant un tel matériau

Ainsi, la présente invention concerne un procédé pour doter un support en un matériau carboné poreux avec des nanotubes de carbone verticalement alignés tel que défini dans la revendication 1 du jeu de revendications annexé, ledit procédé présentant une première étape de dépôt d'une sous-couche de céramique sur ledit support suivie d'une deuxième étape de synthèse, par dépôt chimique catalytique en phase vapeur, desdits nanotubes de carbone verticalement alignés sur le support obtenu suite à la première étape, la source de carbone nécessaire à la synthèse lors de cette deuxième étape étant injectée dans une direction sensiblement perpendiculaire au plan du support et à une pression comprise entre 3.10⁴ Pa (300 mbar) et 6.10⁴ Pa (600 mbar).

Par « support en un matériau carboné poreux », on entend un support en un matériau constitué essentiellement d'un squelette carboné et présentant des pores. Avantageusement, en vue d'une application pour préparer une électrode, ce matériau est conducteur de l'électricité.

Le support en un matériau carboné poreux mis en œuvre dans le cadre de la présente invention se présente sous forme de fibres de carbone. Dans le cas de fibres de carbone, ces dernières se présentent aussi bien sous forme non tissée du type faisceau ou forme unidirectionnelle (UD) que sous forme tissée formant ainsi un tissu (ou une nappe). Dans le cas de fibres de carbone ou d'un tissu de fibres de carbone, les pores du matériau poreux correspondent aux espaces vides présents entre les fibres de carbone.

Le support mis en œuvre dans l'invention présente une forme adaptée à son utilisation ultérieure et notamment pour préparer une électrode. A titre d'exemples illustratifs, ce support peut présenter une forme plane ou une forme de ruban. Typiquement le support mis en œuvre dans l'invention présente une épaisseur comprise entre 1 µm et 1 mm et notamment entre 2 µm et 500 µm.

Par « doter un support en un matériau carboné poreux de nanotubes de carbone verticalement alignés » ou « doter un support en un matériau carboné poreux avec des nanotubes de carbone verticalement alignés », on entend synthétiser, à la surface et dans le volume du support, des nanotubes de carbone. Ces nanotubes s'étendent sensiblement perpendiculairement à la surface du support i.e. l'axe des nanotubes de carbone est sensiblement perpendiculaire à l'axe des fibres de carbone présentes en surface et dans le volume du support ou l'axe des nanotubes de carbone est sensiblement perpendiculaire à la surface des parois d'alvéoles en surface et dans le volume de la mousse de carbone. Ces nanotubes de carbone forment des tapis dont la base correspond soit à des fibres de carbone, soit à des parois d'alvéoles d'une mousse de carbone.

Les première et deuxième étapes du procédé selon l'invention sont des étapes bien connues de l'homme du métier notamment décrites dans la demande internationale WO 2009/103925 **[8]** et la demande internationale WO 2015/071408 **[9].** Ces étapes sont réalisables par lots (technique dite en anglais « batch-to-batch »)/ en défilé continu (technique dite en anglais « roll to roll »), elles sont donc facilement industrialisables. A noter que, comme précédemment expliqué, le procédé selon la présente invention se distingue des procédés de l'art antérieur, d'une part, par la direction d'injection des précurseurs nécessaires à la croissance des nanotubes de carbone et, d'autre part, par la pression à laquelle cette croissance est réalisée.

Ainsi, la première étape consiste à former, sur le support en un matériau carboné poreux, une sous-couche céramique. Par « céramique », on entend aussi bien une céramique oxyde choisie dans le groupe constitué par un oxyde de silicium (SiOₓ avec 0<x≤2), de l'oxyde d'aluminium (Al₂O₃), de l'oxyde de zirconium (ZrO₂) ou de l'oxyde de titane (TiO₂) qu'une céramique non oxyde choisie dans le groupe constitué par du carbure de silicium (SiC), du carbonitrure de silicium (SiCN), du nitrure d'aluminium (AIN), du nitrure de titane (TiN), de l'oxynitrure de silicium (SiON) ou de l'oxycarbonitrure de silicium (SiOCN). Avantageusement, la céramique mise en œuvre dans le procédé selon l'invention est une céramique oxyde et notamment de l'oxyde de silicium (SiOₓ avec 0<x≤2). Cette première étape est réalisée en décomposant chimiquement, par pyrolyse, des précurseurs de céramique du type précurseurs organométalliques tels que les alcoxysilanes comme le tetraéthoxysilane (TEOS). D'autres précurseurs utilisables sont fournis dans **[8].** Les précurseurs, préalablement à leur décomposition, sont dissous ou placés en suspension dans un solvant organique liquide à pression et température ambiantes comme, à titre d'exemples illustratifs et non exhaustifs, du benzène, du toluène, du xylène, du cyclohexane, de l'hexane ou de l'heptane. Typiquement, cette première étape est effectuée à une température et à une pression telles que définies dans la revendication 1. Il a été démontré que l'épaisseur de la sous-couche céramique ainsi obtenue a une influence sur la croissance subséquente des VACNT. Ainsi, l'homme du métier pourra, par un travail de routine, définir l'épaisseur la mieux adaptée. Cette couche joue un rôle de couche barrière de diffusion entre le support et les précurseurs nécessaires à la croissance des VACNT.

En effet, la synthèse lors de la deuxième étape se fait en présence de précurseurs que sont une source catalytique et une source de carbone. La source catalytique peut être pré-déposée sur le support ou, au contraire, être co-injectée avec la source de carbone. Lorsque la source catalytique est pré-déposée, ce pré-dépôt est réalisé par une technique physique. A titre d'exemples illustratifs, ce pré-dépôt est réalisé par injection de la source catalytique dans les mêmes conditions en termes de direction d'injection et de pression que celles définies pour l'injection de la source de carbone conformément au procédé selon l'invention.

La source catalytique est choisie parmi les métallocènes de métal de transition comme, par exemple, le ferrocène, le nickelocène, le cobaltocène ou l'un quelconque de leurs mélanges. La source de carbone contenant éventuellement d'autres atomes comme l'azote, qui peut être liquide, solide ou gazeuse est choisie parmi les hydrocarbures, les alcools, le monoxyde de carbone, les halogénures de carbone, le toluène, le cyclohexane, les huiles d'origine végétale, la benzylamine, l'acétonitrile, l'éthylènediamine, le dicyanopentane, l'éthylène, l'acétylène, le xylène, le méthane et l'un quelconque de leurs mélanges. Dans le cas d'une source carbonée solide comme, par exemple, du camphre, cette dernière doit être soumise à une étape de sublimation lors de la synthèse. Dans un mode de réalisation particulier de cette synthèse impliquant la co-injection de la source catalytique et de la source de carbone, du ferrocène est véhiculé dans le réacteur à l'aide d'une solution de toluène mise sous forme d'aérosol.

Dans le cadre de la deuxième étape du procédé selon l'invention, cette synthèse est réalisée à une température comprise entre 500°C et 1100°C. Dans certaines formes de mise en œuvre, cette température est comprise entre 800°C et 1000°C. Dans d'autres formes de mise en œuvre, elle peut être comprise entre 500°C et 750°C.

Tout d'abord, le procédé selon la présente invention est caractérisé par la direction d'injection de la source de carbone et de la source catalytique (cas de la co-injection). En effet, la source de carbone et la source catalytique (cas de la co-injection) nécessaire(s) à la synthèse lors de la deuxième étape est/sont injectée(s) dans une direction sensiblement perpendiculaire au plan du support. Cette configuration est définie, dans la présente, par « configuration verticale » par opposition à la « configuration horizontale » utilisée dans **[8].** Par « sensiblement perpendiculaire », on entend que la direction d'injection et le plan du support forme un angle compris entre 60° et 120° et notamment de l'ordre de 90° (i.e. 90° ± 20° ou encore 90° ± 10°).

De plus, l'injection de la source de carbone et de la source catalytique (cas de la co-injection) est réalisée à une pression comprise entre 3.10⁴ Pa (300 mbar) et 6.10⁴ Pa (600 mbar).

Ainsi, la vitesse de croissance des nanotubes de carbone est relativement élevée, notamment comprise entre 1 µm.min⁻¹ et 30 µm.min⁻¹ en fonction des conditions opératoires (température et pression) utilisées. Il est possible de contrôler la longueur des nanotubes de carbone en faisant varier la durée de synthèse des nanotubes de carbone i.e. la durée de la deuxième étape du procédé selon l'invention.

La première étape et la deuxième étape du procédé selon l'invention sont réalisées dans une enceinte, fermée et résistante à une haute température et à une pression réduite.

Dans une première forme de mise en œuvre du procédé selon l'invention, la première étape et la deuxième étape du procédé selon l'invention sont réalisées dans une même chambre de réaction, cette dernière étant présente dans l'enceinte telle que précédemment définie.

Dans une seconde forme de mise en œuvre du procédé selon l'invention la première étape et la deuxième étape sont réalisées respectivement dans une première chambre dite « chambre de pré-traitement » et dans une deuxième chambre dite « chambre de réaction ». Ces deux chambres distinctes sont présentes dans l'enceinte telle que précédemment définie. La pression à laquelle la première étape est réalisée est identique à celle mise en œuvre lors de la deuxième étape.

Dans cette première et seconde formes de mise en œuvre, le flux de précurseurs de céramique est injecté dans une direction sensiblement perpendiculaire au plan du support et la première étape est réalisée à la même pression que celle mise en œuvre lors de la deuxième et à la même température que celle mise en œuvre lors de la deuxième étape.

La présente invention concerne également le support doté de nanotubes de carbone verticalement alignés obtenu suite au procédé selon l'invention. Ces nanotubes de carbone présentent un bon ancrage et une bonne adhérence au support i.e. aux fibres de carbone ou aux parois des alvéoles de la mousse de carbone, ce qui est en faveur d'un bon transfert de charge électrique et de chaleur entre les nanotubes et les fibres de carbone ou la mousse de carbone.

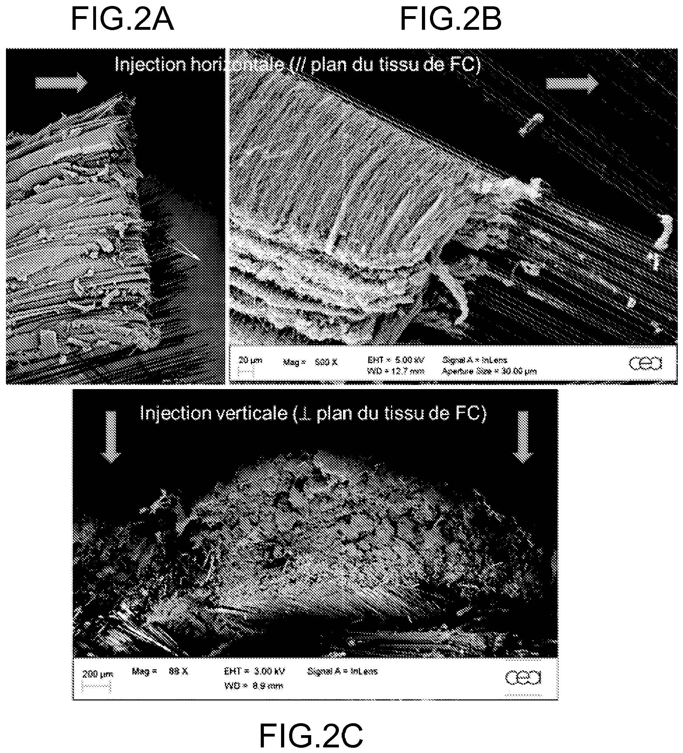

Ce dernier se distingue nettement du matériau obtenu suite au procédé objet de la demande internationale WO 2009/103925 **[8].** En effet, en injectant les précurseurs des nanotubes de carbone parallèlement à la surface du support i.e. configuration horizontale, des nanotubes de carbone se développent principalement sur les fibres en surface du support mais des nanotubes de carbone courts et non alignés peuvent également se développer sur certaines des fibres de carbone dans une zone sous-surfacique dont le volume ne représente pas plus de 10% du volume total du support. Au contraire, dans le cadre de la présente invention et comme illustré à la Figure 2C ci-après, les nanotubes de carbone sont présents dans une zone sous-surfacique dont le volume représente plus de 20%, notamment plus de 40%, en particulier plus de 60% et, plus particulièrement, plus de 80% du volume total du support en un matériau carboné.

Avantageusement, pour le support obtenu suite au procédé selon l'invention, la densité des nanotubes de carbone verticalement alignés peut être variable. La densité des nanotubes de carbone en surface du support est avantageusement comprise entre 10⁶ et 10¹³ nanotubes.cm⁻² de support. Il est ainsi possible d'avoir un matériau présentant des tapis denses de nanotubes de carbone verticalement alignés, avec de l'ordre de 10⁸ à 10¹² nanotubes.cm⁻² et notamment de l'ordre de 10¹⁰ à 10¹² nanotubes. cm⁻². Par ailleurs, le support présente également des nanotubes de carbone verticalement alignés dans son volume.

Pour le support obtenu suite au procédé selon l'invention, les nanotubes de carbone présentent avantageusement une longueur moyenne supérieure à 10 µm. Dans certains modes de réalisation, cette longueur moyenne peut être supérieure à 20 µm, notamment supérieure à 30 µm, en particulier supérieure à 50 µm et, plus particulièrement, supérieure à 100 µm. La valeur la plus élevée citée est avantageusement obtenue pour les nanotubes de carbone verticalement alignés présents à la surface du support, la longueur des nanotubes de carbone verticalement alignés présents dans le volume du support étant plus faible pour des problèmes de diffusion et de disponibilité des précurseurs. De plus, certains des nanotubes de carbone verticalement alignés présents à la surface du support en matériau carboné poreux peuvent présenter une longueur de l'ordre de 150 µm (150 µm ± 30 µm).

Les propriétés du support doté de nanotubes de carbone verticalement alignés obtenu suite au procédé selon l'invention en font un bon candidat pour préparer une électrode mais aussi comme support de catalyseur. La présente invention concerne donc l'utilisation de ce support comme support de catalyseur. Cette utilisation trouve des applications notamment pour une synthèse ultérieure de nanotubes de carbone ou de nanotubes de silice ou encore pour produire de l'hydrogène, les catalyseurs supportés pouvant être, dans ce cas, à base de molybdène, de nickel, de cobalt, de fer ou de complexes moléculaires comme des dérivés de diimine-dioxime de cobalt.

Le support selon la présente invention est notamment utile pour préparer une électrode. Ainsi, la présente invention concerne également un procédé pour la préparation d'une électrode comprenant un support en un matériau carboné poreux, des nanotubes de carbone verticalement alignés et une matrice polymère conductrice de l'électricité, ledit procédé comprenant les étapes successives suivantes :
a) doter un support en un matériau carboné poreux avec des tapis de nanotubes de carbone verticalement alignés selon le procédé précédemment décrit ;
b) déposer électrochimiquement ladite matrice polymère sur lesdits nanotubes de carbone à partir d'une solution électrolytique comprenant au moins un monomère précurseur de ladite matrice.

Suite à la synthèse des nanotubes de carbone verticalement alignés i.e. suite à l'étape (a) et préalablement à l'étape (b), les nanotubes de carbone verticalement alignés peuvent être soumis à un traitement (ou pré-traitement) oxydant i.e. visant à oxyder la surface des nanotubes mis en œuvre et/ou à préparer la surface à une future oxydation par formation de radicaux. Une oxydation modifie la surface des nanotubes notamment en fixant et/ou en introduisant, sur les extrémités ou défauts des nanotubes, des groupements riches en oxygène tels que des groupements de type carboxylique (-COOH i.e. -C(=O)OH), hydroxyle (-OH), alcoxyle (-OX avec X représentant un groupe alkyle, un groupe acyle ou un groupe aroyle), carbonyle (-C(=O)-), percarbonique (-C(=O)-O-OH) et parfois amide (-CONH).

Un tel traitement oxydant repose sur deux grands types de modifications de surface fondés sur :
- des traitements physiques tels qu'un traitement par plasma notamment d'oxygène, un traitement aux UV, un traitement aux rayons X ou γ, un traitement par irradiation aux électrons et aux ions lourds ou
- des traitements chimiques tels qu'un traitement à la potasse alcoolique, un traitement par un acide fort (HCl, H₂SO₄, HNO₃, HClO₄), un traitement à la soude, un traitement par un oxydant fort (KMnO₄, K₂Cr₂0₇, KClO₃ ou CrO₃ dans l'acide chlorhydrique, l'acide sulfurique ou l'acide nitrique), un traitement à l'ozone et un traitement thermique sous atmosphère oxygénée (O₂, H₂O,...).

De tels nanotubes, une fois ce traitement oxydant mis en œuvre, peuvent se présenter sous forme de nanotubes modifiés en surface comme, par exemple, des nanotubes chargés négativement.

L'étape (b) du procédé selon la présente invention consiste à appliquer, de façon électrochimique, sur les tapis de nanotubes de carbone synthétisés lors de l'étape (a) en surface et dans le volume du support en un matériau carboné poreux, une matrice polymère conductrice de l'électricité.

Par « matrice polymère conductrice de l'électricité », on entend, dans le cadre de la présente invention, une structure se présentant sous forme d'un film, poreux ou non poreux, à la surface des nanotubes de carbone mis en œuvre dans le procédé de l'invention et essentiellement constituée d'un (ou plusieurs) (co)polymère(s) conducteur(s) de l'électricité. Dans le tapis de nanotubes de carbone tels qu'obtenus suite à l'étape (a) du procédé, la matrice est associée aux nanotubes de carbone en étant déposée sur toute la longueur des VACNT, c'est-à-dire sur et au niveau de la surface latérale des nanotubes de carbone, pouvant avantageusement former une gaine autour des nanotubes, ainsi que dans l'espace entre les nanotubes. Avantageusement, l'épaisseur de cette gaine est homogène pour un nanotube de carbone et, de façon plus avantageuse, elle est homogène pour l'ensemble des nanotubes de carbone en surface et dans le volume du support en un matériau carboné poreux.

Par « (co)polymère conducteur de l'électricité », on entend, dans le cadre de la présente invention, un (co)polymère dont la chaîne principale polymérique et éventuellement les chaînes latérales présentent au moins une double liaison ou au moins un cycle aromatique. Typiquement, un (co)polymère conducteur de l'électricité est obtenu par polymérisation d'un (ou plusieurs) monomère(s) portant une double liaison et/ou un cycle aromatique et éventuellement un hétéroatome tel qu'un atome d'oxygène, un atome d'azote, un atome de soufre ou un atome de fluor.

La matrice polymère mise en œuvre dans le cadre de la présente invention est avantageusement constituée d'un (ou plusieurs) (co)polymère(s) choisi(s) parmi les polyfluorènes, les polypyrènes, les polyazulènes, les polynaphtalènes, les polypyrroles, les polycarbazoles, les polyindoles, les polyazépines, les polyanilines, les polythiophènes, les polysulfure de phénylène ou encore des polymères de type ABA composés d'une unité B aromatique telle que benzène, thiophène, pyrrole, carbazole, fluorène, éventuellement fonctionalisée par des chaînes alkyles, alcoxy, oligoéthers, thioéthers, ou alcène ou alcyne conjugués et d'unités A électropolymérisables du type thiophène, alkylthiophène, 3,4-alkylènedioxythiophène et leurs dérivés ou encore pyrrole, alkylpyrrole, N-alkylpyrrole, 3,4-alkylènedioxypyrrole et leurs dérivés.

De façon avantageuse, la matrice polymère mise en œuvre dans le cadre de la présente invention est constituée d'un (ou plusieurs) (co)polymère(s) choisi(s) parmi les polypyrroles, les polycarbazoles, les polyanilines et les polythiophènes.

L'homme du métier connaît différents monomères précurseurs utilisables pour obtenir, par polymérisation, les polymères ci-dessus listés.

A titre d'exemples, les polypyrroles peuvent être obtenus par polymérisation d'un (ou plusieurs) monomère(s) choisi(s) parmi le pyrrole et les dérivés du pyrrole. Un dérivé du pyrrole est avantageusement un pyrrole substitué par au moins un substituant choisi parmi un (hétéro)alkyle, linéaire, ramifié ou cyclique en C1 à C10 et notamment en C1 à C5, éventuellement substitué ; un atome d'halogène ; un groupement -OH ; un groupement -COOH ; un alcoxyalkyle en C2 à C20 et notamment en C2 à C10, éventuellement substitué ; un polyéther d'alcoxyle ; un polyéther d'alkylène ; un (hétéro)aryle en C3 à C20 et notamment en C4 à C16, éventuellement substitué ou un (hétéro)aralkyle en C3 à C20 et notamment en C4 à C16, éventuellement substitué. Un tel dérivé de pyrrole est notamment un alkylpyrrole, un N-alkylpyrrole ou un 3,4-alkylènedioxypyrrole. Un dérivé d'un pyrrole peut également être un pyrrole substitué par au moins deux substituants formant un groupement pontant en C1 à C10 et notamment en C1 à C5 comprenant éventuellement un hétéroatome. A titre d'exemples de dérivés de pyrrole utilisables, on peut citer le 3-méthyl pyrrole, le 3-éthyl pyrrole, le 3-butyl pyrrole, le 3-bromo pyrrole, le 3-méthoxy pyrrole, le 3,4-dichloro pyrrole et le 3,4-dipropoxy pyrrole.

Par « éventuellement substitué », on entend dans le cadre de la présente invention un groupement qui peut être substitué par -OH, -COOH, un atome d'halogène ou un alkyle en C1 à C4.

A titre d'exemples, les polycarbazoles peuvent être obtenus par polymérisation d'un (ou plusieurs) monomère(s) choisi(s) parmi le carbazole et les dérivés du carbazole. Un dérivé du carbazole est avantageusement un carbazole substitué par au moins un substituant choisi parmi un (hétéro)alkyle, linéaire, ramifié ou cyclique en C1 à C10 et notamment en C1 à C5, éventuellement substitué ; un atome d'halogène ; un groupement -OH ; un groupement -COOH ; un alcoxyalkyle en C2 à C20 et notamment en C2 à C10, éventuellement substitué ; un polyéther d'alcoxyle ; un polyéther d'alkylène ; un (hétéro)aryle en C3 à C20 et notamment en C4 à C16, éventuellement substitué ou un (hétéro)aralkyle en C3 à C20 et notamment en C4 à C16, éventuellement substitué. Un dérivé d'un carbazole peut également être un carbazole substitué par au moins deux substituants formant un groupement pontant en C1 à C10 et notamment en C1 à C5 comprenant éventuellement un hétéroatome.

A titre d'exemples, les polyanilines peuvent être obtenus par polymérisation d'un (ou plusieurs) monomère(s) choisi(s) parmi l'aniline et les dérivés de l'aniline. Un dérivé de l'aniline est avantageusement une aniline substituée par au moins un substituant choisi parmi un (hétéro)alkyle, linéaire, ramifié ou cyclique en C1 à C10 et notamment en C1 à C5, éventuellement substitué ; un atome d'halogène ; un groupement -OH ; un groupement -COOH ; un alcoxyalkyle en C2 à C20 et notamment en C2 à C10, éventuellement substitué ; un polyéther d'alcoxyle ; un polyéther d'alkylène ; un (hétéro)aryle en C3 à C20 et notamment en C4 à C16, éventuellement substitué ou un (hétéro)aralkyle en C3 à C20 et notamment en C4 à C16, éventuellement substitué. Un dérivé de l'aniline peut également être une aniline substituée par au moins deux substituants formant un groupement pontant en C1 à C10 et notamment en C1 à C5 comprenant éventuellement un hétéroatome.

A titre d'exemples, les polythiophènes peuvent être obtenus par polymérisation d'un (ou plusieurs) monomère(s) choisi(s) parmi le thiophène et les dérivés du thiophène. Un dérivé du thiophène est avantageusement un thiophène substitué par au moins un substituant choisi parmi un (hétéro)alkyle, linéaire, ramifié ou cyclique en C1 à C10 et notamment en C1 à C5, éventuellement substitué ; un atome d'halogène ; un groupement -OH ; un groupement -COOH ; un alcoxyalkyle en C2 à C20 et notamment en C2 à C10, éventuellement substitué ; un polyéther d'alcoxyle ; un polyéther d'alkylène ; un (hétéro)aryle en C3 à C20 et notamment en C4 à C16, éventuellement substitué ou un (hétéro)aralkyle en C3 à C20 et notamment en C4 à C16, éventuellement substitué. Parmi les thiophènes substitués par au moins un (hétéro)aryle en C3 à C20, on peut citer les thiophènes substitués par au moins un aryle en C3 à C20 perfluoré. Un dérivé d'un thiophène peut également être un thiophène substitué par au moins deux substituants formant un groupement pontant en C1 à C10 et notamment en C1 à C5 comprenant éventuellement un hétéroatome. A titre d'exemples de dérivés de thiophène utilisables, on peut citer le 3-acide acétique thiophène, le 3,4-éthylènedioxythiophène, le 3-méthylthiophène (3MT), le 3,4-diméthylthiophène, le 3-éthylthiophène, le 3-butylthiophène, le 3-bromothiophène, le 3-méthoxythiophène, le 3,4-diméthoxythiophène, le 3,4-dichlorothiophène, le 3,4-dipropoxythiophène et le 3-perfluorophénylthiophène.

Avantageusement, l'étape (b) du procédé selon l'invention comprend les sous-étapes suivantes :
b₁) mettre en contact le support en matériau carboné poreux présentant des nanotubes de carbone verticalement alignés avec une solution électrolytique contenant le (ou les) monomère(s) précurseur(s) de ladite matrice polymère conductrice ;
b₂) polariser lesdits les nanotubes de carbone moyennant quoi ladite matrice polymère conductrice est électrochimiquement déposée sur lesdits les nanotubes de carbone.

La solution électrolytique mise en œuvre dans le procédé selon l'invention comprend un monomère ou plusieurs monomères différents, précurseur(s) de la matrice polymère conductrice de l'électricité dans un solvant. Ce dernier peut être un solvant protique, un solvant aprotique, un liquide ionique ou un de leurs mélanges.

Par « mélange », on entend un mélange d'au moins deux solvants protiques différents, un mélange d'au moins deux solvants aprotiques différents, un mélange d'au moins deux liquides ioniques différents, un mélange d'au moins un solvant protique et d'au moins un solvant aprotique, un mélange d'au moins un solvant protique et d'au moins un liquide ionique ou encore un mélange d'au moins un solvant aprotique et d'au moins un liquide ionique.

Par « solvant protique », on entend, dans le cadre de la présente invention, un solvant qui comporte au moins un atome d'hydrogène susceptible d'être libéré sous forme de proton et avantageusement choisi dans le groupe constitué par l'eau, l'eau désionisée, l'eau distillée, acidifiées ou basiques, l'acide acétique, les solvants hydroxylés comme le méthanol et l'éthanol, les glycols liquides de faible poids moléculaire tels que l'éthylèneglycol, et leurs mélanges.

Par « solvant aprotique », on entend, dans le cadre de la présente invention, un solvant qui n'est pas susceptible de libérer un proton ou d'en accepter un dans des conditions non extrêmes et avantageusement choisi parmi les alcanes halogénés tels que le dichlorométhane ; la diméthylformamide (DMF) ; les cétones tels que l'acétone ou la 2-butanone; l'acétonitrile; le carbonate de propylène, la gamma-butyrolactone (GBL), le tétrahydrofuranne (THF); la N-méthylpyrrolidone (NMP); le diméthylsulfoxyde (DMSO) et leurs mélanges.

Lorsque le solvant mis en œuvre est un solvant protique, un solvant aprotique ou un de leurs mélanges, la solution électrolytique utilisable dans le cadre de la présente invention comprend, en plus de ce solvant, un électrolyte sous forme d'un sel dissous dans le solvant. L'anion de ce sel peut être choisi parmi les anions inorganiques tels que Br⁻, Cl⁻, HCO₃⁻, H₂PO₄⁻, Cr₂O₄³⁻, BF₄⁻ ou PF₆⁻ ; les anions organiques ; les anions polymériques et les anions biologiques. Le cation de ce sel est un cation métallique tel que Li⁺, Na⁺, Mg²⁺, Cu²⁺, Zn²⁺ et Al³⁺.

D'autres exemples de solvants et d'électrolytes utilisables dans le cadre de la présente invention sont donnés aux paragraphes [0040] à [0048] de la demande de brevet US 2003/077515 **[13].**

Dans le cadre de la présente invention, un « liquide ionique » est un sel organique dans un état liquide à une température inférieure à 100°C et notamment dans un état liquide à température ambiante (i.e. 22°C ± 5°C).

Parmi ces liquides ioniques, on peut citer des liquides ioniques ayant au moins un cation protique ou aprotique, substitué ou non, choisi parmi la famille du pyridinium, pyridazinium, pyrimidinium, pyrazinium, imidazolium, pyrazolium, thiazolium, oxazolium, triazolium, ammonium, pyrrolidinium, pyrrolinium, pyrrolium, piperidinium et au moins un anion, organique ou non, substitué ou non, choisi parmi F⁻; Cl⁻, Br⁻; I⁻; NO₃⁻; N(CN)₂⁻; BF₄⁻; ClO₄⁻; PF₆⁻; RSO₄⁻; RSO₃⁻; RCOO⁻ où R est un groupe alkyle ou phényle; (CF₃)₂PF₄⁻; (CF₃)₃PF₃⁻; (CF₃)₄PF₃⁻; (CF₃)₅PF⁻; (CF₃)₆P⁻; (CF₂SO₃⁻)₂; (CF₂CF₂SO₃⁻)₂; (CF₃SO₂)₂N⁻; CF₃CF₂(CF₃)₂CO⁻; (CF₃SO₂)₂CH⁻; (SF₅)₃C⁻; (CF₃SO₂)₃C; [O(CF₃)₂C₂(CF₃)₂O]₂PO⁻; CF₃(CF₂)₇SO₃⁻; CNSe⁻; CNS⁻; le bis(oxalato)borate et un anion dérivé de l'imidazole.

D'autres exemples de cations utilisables pour le liquide ionique mis en œuvre dans la présente invention sont décrits dans la demande internationale WO 2012/004317 **[14]** (page 24, lignes 1 à 22). De même, d'autres liquides ioniques utilisables dans le cadre de la présente invention sont décrits dans la demande internationale WO 2008/016990 **[15]** (page 18, lignes 5 à 23).

Avantageusement, le liquide ionique mis en œuvre dans le cadre de la présente invention est choisi dans le groupe constitué par un dialkylpyrrolidinium bis(trifluoromethylsulfonyl)imide ([DAPyr][TFSI]), un dialkylpyrrolidinium bis(fluoromethylsulfonyl)imide ([DAPyr][FSI]), un dialkylpyrrolidinium tetrafluoroborate ([DAPyr][BF4]), un dialkylpyrrolidinium hexafluorophosphate ([DAPyr][PF6]), un dialkylpyrrolidinium selenocyanate ([DAPyr][SeCN]), un dialkylpyrrolidinium thiocyanate ([DAPyr][SCN]), un bromure de dialkylpyrrolidinium ([DAPyr][Br]), le 1-éthyl-3-méthylimidazolium bis(trifluoromethylsulfonyl)imide ([EMI][TFSI]), le 1-éthyl-3-méthylimidazolium bis(fluoromethylsulfonyl)imide ([EMI][FSI]), le 1-éthyl-3-méthylimidazolium tetrafluoroborate ([EMI][BF4]), le 1-éthyl-3-methylimidazolium hexafluorophosphate ([EMI][PF6]), le 1-éthyl-3-méthylimidazolium selenocyanate ([EMI][SeCN]), le 1-éthyl-3-méthylimidazolium thiocyanate ([EMI][SCN]), le 1-butyl-3-méthylimidazolium bis(trifluorométhylsulfonyl)imide ([BMI][TFSI]), le 1-butyl-3-méthylimidazolium tétrafluoroborate ([BMI][BF4]), le 1-butyl-3-méthylimidazolium hexafluorophosphate ([BMI][PF6]), l'iodure de 1-méthyl-3-n-hexylimidazolium ([MHIm][I]) et le butyltriméthylammonium bis(trifluorométhylsulfonyl)imide ([BtMA][TFSI]).

Dans un mode de réalisation particulier, le solvant de la solution électrolytique mise en œuvre dans le procédé selon l'invention est un mélange d'au moins un liquide ionique tel que précédemment défini et d'au moins un solvant protique tel que précédemment défini.

Dans un autre mode de réalisation particulier, le solvant de la solution électrolytique mise en œuvre dans le procédé selon l'invention est un mélange d'au moins un liquide ionique tel que précédemment défini et d'au moins un solvant aprotique tel que précédemment défini. En particulier, dans ce mode de réalisation, le solvant aprotique est de l'acétonitrile, le liquide ionique pouvant être l'un quelconque des liquides ioniques précédemment envisagés.

Les proportions de liquide ionique et de solvant protique ou aprotique dans la solution électrolytique mise en œuvre dans la présente invention varient en fonction de la viscosité du liquide ionique afin de conserver une faible viscosité globale à cette solution assurant une bonne diffusion des espèces au sein du milieu liquide remplissant les espaces inter-tubes. Ces proportions peuvent être de 15 à 85% en volume pour le solvant protique ou aprotique et le complément à 100% pour le liquide ionique. Ainsi, le mélange peut comporter entre 60 et 85% en volume de solvant protique ou aprotique et entre 15 et 40% en volume de liquide ionique et notamment environ 75% (i.e. 75% ± 5%) en volume de solvant protique ou aprotique et environ 25% (i.e. 25% ± 5%) en volume de liquide ionique. Un exemple particulier d'un tel mélange est un mélange à environ 75% en volume d'acétonitrile et à environ 25% de [EMI][TFSI] ou de [EMI][BF4]. En variante, le mélange peut comporter entre 40 et 60% en volume de solvant protique ou aprotique et entre 40 et 60% en volume de liquide ionique et notamment environ 50% (i.e. 50% ± 5%) en volume de solvant protique ou aprotique et environ 50% (i.e. 50% ± 5%) en volume de liquide ionique. Un exemple particulier d'un tel mélange est un mélange à environ 50% en volume d'acétonitrile et à environ 50% de [EMI][TFSI] ou de [EMI][BF4].

Le (ou les) monomère(s) précurseur(s) de la matrice polymère conductrice est(sont) présent(s) dans la solution électrolytique en une quantité maximale déterminée par rapport à leur solubilité dans le solvant employé. Typiquement, le (ou les) monomère(s) précurseur(s) de la matrice polymère conductrice est(sont) présent(s) en une quantité comprise entre 2% et 20% en volume par rapport au volume total de ladite solution électrolytique.

De plus, la solution électrolytique doit présenter une viscosité adaptée pour permettre une pénétration entre les nanotubes de carbone (espacement inter-tubes compris entre quelques nm et la centaine de nm) de manière homogène et ce, idéalement, sur toute l'épaisseur des tapis présents à la surface et dans le volume du support en un matériau carboné poreux. Dans le cas d'une solution électrolytique dont le solvant comprend au moins un liquide ionique, la viscosité de cette dernière dépend fortement de la nature et de la proportion de liquide ionique qu'elle contient. Typiquement, cette viscosité est comprise entre 0,37 mPa.s et 200 mPa.s et avantageusement entre 1,0 mPa.s et 36 mPa.s dans les conditions standards de température et de pression.

Le dépôt électrochimique de la matrice polymère conductrice de l'électricité sur les nanotubes de carbone lors de l'étape (b) ou lors de la sous-étape (b₂) du procédé selon l'invention peut impliquer soit une méthode cyclique, soit une méthode statique pulsée ou non avec soit la tension, soit le courant qui est imposé(e). Dans un mode de réalisation particulier, il est possible de réaliser ce dépôt électrochimique en combinant ces différentes méthodes. En d'autres termes, le procédé de dépôt par voie électrochimique peut se faire par une méthode cyclique et/ou une méthode galvanostatique pulsée ou continue et/ou une méthode potentiostatique pulsée ou continue. Le procédé de dépôt consiste à oxyder un monomère précurseur présent dans l'électrolyte pour le polymériser et assurer son dépôt sous forme d'un polymère électro-conducteur autour et sur les nanotubes de carbone.

Le dépôt électrochimique lors de l'étape (b) ou lors de la sous-étape (b₂) du procédé selon l'invention est typiquement réalisé dans une cellule électrochimique équipée de deux électrodes (électrode de travail et contre-électrode) ou trois électrodes (électrode de travail, contre-électrode et électrode de référence). L'électrode de travail (ou anode) correspond au support en carbone poreux doté des nanotubes de carbone, tandis que la contre-électrode (ou cathode) est, par exemple, une grille de platine ou une plaque de titane platiné ou une pâte de noir de carbone et de carbone activé encapsulés dans une grille d'inox ou une pâte de noir de carbone, de carbone activé et de téflon encapsulés dans une grille d'inox pour le contact électrique. La contre-électrode présente une surface et une capacitance adaptées à la surface et à la capacitance de l'électrode de travail. Lorsqu'elle est présente, l'électrode de référence qui permet de connaître, à tout moment, la valeur du potentiel de l'électrode de travail, est typiquement une électrode de type pseudo-référence en métal comme, par exemple, un fil d'argent ou un fil de platine.

Le dispositif électrochimique mis en œuvre dans l'invention comprend une cellule électrochimique telle que précédemment définie associée à un générateur de courant ou de tension.

La méthode cyclique de dépôt électrochimique ou voltammétrie cyclique consiste à faire varier le potentiel de l'électrode de travail à une vitesse de balayage donnée. La gamme de tension appliquée est choisie en fonction de la plage de potentiels désirée pour l'électrode de travail. Avantageusement, lors de l'étape (b) ou lors de la sous-étape (b₂) du procédé selon l'invention, la tension peut varier de -3 à +3 V et, en particulier, de -2 à +2 V en fonction du monomère et de l'électrolyte choisis. Le courant varie en fonction de la taille de l'échantillon et en fonction de la vitesse de balayage de telle manière que la densité de courant soit de l'ordre de 10 mA.cm⁻². La vitesse de balayage est notamment comprise entre 2 et 500 mV/s, en particulier, entre 3 et 100 mV/s et, plus particulièrement, entre 5 et 30 mV/s. Le nombre de cycles est notamment compris entre 15 et 200 et, en particulier, entre 20 et 150. A titre d'exemple illustratif de conditions utilisées lors de la voltammétrie cyclique pour le monomère 3-methylthiophène (3MT) à une concentration de 0,4 M dans un mélange équivolumique d'acétonitrile et de [EMI][TFSI], on peut citer :
- une tension imposée entre -0,5 et 1,6 V à une vitesse de balayage de 20 mV/s pendant 24 cycles ;
- une tension imposée entre -0,5 et 1,35 V à une vitesse de balayage de 20 mV/s pendant 10 cycles puis une tension imposée entre -0,5 et 1,25 V à une vitesse de balayage de 20 mV/s pendant 26 cycles.

La méthode potentiostatique pulsée ou galvanostatique pulsée consiste à enchaîner des temps de dépôt du polymère électro-conducteur (t_{ON}) et des temps de repos (t_{OFF}) en appliquant, entre la cathode et l'anode, une tension ou respectivement un courant. Dans le cadre du procédé selon l'invention, le temps de dépôt correspond à l'oxydation du monomère précurseur. Cette oxydation se fait en imposant soit un courant pendant un temps donné (t_{ON}) (chronopotentiométrie), soit une tension pendant un temps donné (t_{ON}) (chronoampérométrie). Pendant t_{OFF}, le monomère n'est pas oxydé ce qui lui laisse le temps de diffuser au sein du tapis de nanotubes de carbone. Ce temps de repos t_{OFF} peut se faire par une ouverture du circuit électrique ou bien en imposant un courant ou une tension plus bas que celui imposé durant le temps de dépôt t_{ON} et ne permettant pas d'oxyder le monomère. Lors de ce temps de repos t_{OFF}, une agitation de la solution électrolytique peut être mise en œuvre pour faciliter la diffusion du monomère au sein du tapis de nanotubes de carbone verticalement alignés.

Déterminer les temps t_{ON} et t_{OFF} les mieux adaptés en fonction du polymère électro-conducteur à déposer est un travail de routine pour l'homme du métier.

Dans le cas de la chronopotentiométrie pulsée ou non pulsée, le courant imposé lors du temps de dépôt t_{ON} correspond à une valeur déterminée qui est adaptée afin d'obtenir une tension suffisante pour oxyder le monomère précurseur. Cette valeur déterminée est fonction du type de monomère(s) précurseur(s) mis en œuvre et de la viscosité de la solution électrolytique. Par exemple, dans le cas du monomère 3MT, pour une surface de support en matériau carboné poreux doté de nanotubes de carbone de l'ordre de 1 cm², et pour une solution électrolytique dont le solvant est composé d'acétonitrile (75% ou 50% en volume) et de EMITFSI (25% ou 50% en volume), la valeur déterminée du courant est d'environ 4 mA.

Dans le cas de la chronoampérométrie pulsée ou non pulsée, la tension imposée lors du temps de dépôt t_{ON} correspond à une valeur déterminée qui est adaptée afin d'obtenir un courant suffisant pour oxyder le monomère précurseur. Cette valeur déterminée est fonction du type de monomère(s) précurseur(s) mis en œuvre et de la viscosité de la solution électrolytique. Par exemple, dans le cas du monomère 3MT, pour une surface de support en matériau carboné poreux doté de nanotubes de carbone de l'ordre de 1 cm² et pour une solution électrolytique dont le solvant est composé d'acétonitrile (75% ou 50% en volume) et de EMITFSI (25% ou 50% en volume), la valeur déterminée de la tension est d'environ 1,5 V (i.e. 1,5 V ± 0,2 V).

Lorsque la technique utilisée lors de l'étape (b) ou de la sous-étape (b₂) du procédé selon l'invention est une technique pulsée, le nombre de pulses est défini par la quantité massique de polymère que l'on souhaite déposer. Typiquement, le nombre de pulses varie de 5 à 1000.

La durée de l'étape (b) ou de la sous-étape (b₂) du procédé selon l'invention mettant en œuvre soit une méthode voltammétrie cyclique, soit une méthode, potentiostatique ou galvanostatique, pulsée ou non pulsée est variable de quelques minutes à plusieurs heures. Typiquement, cette durée est comprise entre 5 min et 8 h, avantageusement entre 10 min et 4 h et, en particulier, entre 15 min et 2 h. Elle dépend de la quantité de polymère à déposer pour avoir un dépôt homogène autour des nanotubes de carbone verticalement alignés. L'homme du métier saura adapter, sans effort inventif, cette durée en fonction de la densité et de la longueur des nanotubes de carbone verticalement alignés et de la quantité de matrice polymère à déposer.

Enfin, il est possible de combiner les méthodes potentiostatiques pulsées ou galvanostatiques pulsées. Il est par exemple possible de fixer d'abord la tension (chronoampérométrie) afin d'oxyder le polymère électro-conducteur déjà déposé lors des cycles précédents puis de fixer le courant (chronopotentiométrie) afin d'oxyder le monomère, puis de laisser le circuit électrique ouvert pour laisser diffuser le monomère au sein des nanotubes de carbone verticalement alignés.

L'étape (b) et notamment la sous-étape (b₂) du procédé selon l'invention sont réalisées à une température comprise entre 15°C et 100°C et avantageusement à température ambiante (i.e. 22°C ± 5°C). La température pourra être adaptée en fonction de la viscosité désirée pour la solution électrolytique.

Par ailleurs, l'étape (b) et notamment la sous-étape (b₂) du procédé selon l'invention sont réalisables sous atmosphère non contrôlée i.e. sous air ambiant. En variante, elles peuvent être réalisées dans une atmosphère ayant le moins d'oxygène et d'eau possible. A cet effet, on peut envisager de réaliser cette étape et cette sous-étape en atmosphère inerte. Pour cela, un gaz inerte tel que l'argon ou l'azote peut être employé pour générer cette atmosphère inerte. L'utilisation d'une atmosphère inerte associée à un bullage d'un gaz inerte dans la solution électrolytique permet de supprimer l'oxygène éventuellement présent dans cette dernière.

Il convient de noter que le dépôt électrochimique lors de l'étape (b) et notamment la sous-étape (b₂) du procédé selon l'invention peut être industrialisé, par exemple par une technique en batch to batch ou en défilé continu (technique dite en anglais « roll to roll ») avec le support en un matériau carboné poreux baignant dans une solution électrolytique telle que précédemment définie.

La durée de l'étape (b) et notamment de la sous-étape (b₂) du procédé selon l'invention, permet d'ajuster le pourcentage en masse de la matrice polymère conductrice de l'électricité par rapport à la masse totale du composite correspondant aux nanotubes de carbone verticalement alignés revêtus de cette matrice polymère conductrice de l'électricité pour maximiser la capacitance du composite une fois fabriqué et ce, afin de fournir un supercondensateur utilisant un tel composite en tant qu'électrode, qui présente une capacitance la plus élevée possible. La matrice polymère conductrice de l'électricité représente un pourcentage massique par rapport à la masse totale dudit composite pouvant aller jusqu'à 99%, notamment compris entre 5 et 95% et, en particulier, entre 10 et 80%. La masse de la matrice polymère conductrice de l'électricité et celle du composite peuvent être obtenues par ATG pour « Analyse Thermo Gravimétrique » et/ou par pesée et/ou par intégration du courant ayant traversé le circuit électrique durant l'étape de polymérisation.

Suite à l'étape (b) et notamment suite à la sous-étape (b₂), le procédé selon l'invention peut présenter une étape de rinçage et éventuellement une étape de séchage.

L'étape de rinçage a pour but principal, de nettoyer, de retirer les résidus/impuretés du type monomères ou oligomères qui resteraient sur des parties du support, des nanotubes de carbone ou de la matrice polymère et qui n'auraient pas été déposés. De tels résidus/impuretés pourraient engendrer des problèmes lors de l'étape d'encapsulation et des dysfonctionnements du supercondensateur. Avantageusement, l'étape de rinçage est réalisée en faisant tremper le support en un matériau carboné poreux doté des nanotubes de carbone et de la matrice polymère conductrice d'électricité dans un solvant organique tel qu'acétonitrile, acétone, éthanol ou isopropanol. L'homme du métier saura déterminer le solvant organique le mieux adapté pour l'étape de rinçage, ce dernier devant éviter tout décollement de la matrice polymère. Le rinçage consiste à faire tremper le support en un matériau carboné poreux doté des nanotubes de carbone et de la matrice polymère conductrice d'électricité dans le solvant pendant un temps variable de 2 à 30 min et en renouvelant l'opération si besoin jusqu'à cinq fois par exemple.

De plus, l'étape optionnelle de séchage du support en un matériau carboné poreux, doté des nanotubes de carbone et de la matrice polymère conductrice d'électricité peut être réalisée en laissant ce dernier, une fois rincé, à l'air libre afin que le solvant utilisé pour le rinçage s'évapore. En variante, ce séchage peut être effectué sous balayage de gaz inerte ou en chauffant le support en un matériau carboné poreux, doté des nanotubes de carbone et de la matrice polymère conductrice d'électricité, sous vide, ou sous gaz inerte ou au moyen d'une lampe infrarouge. Cette variante peut être mise en œuvre dans le cas d'un procédé en continu.

La présente invention concerne également une électrode susceptible d'être préparée par le procédé selon l'invention tel que précédemment défini. Cette électrode présente un support en un matériau carboné poreux, doté de nanotubes de carbone verticalement alignés à sa surface et dans son volume et d'une matrice polymère conductrice d'électricité. Il s'agit donc d'une électrode monocouche.

Tout ce qui a été précédemment indiqué sur le support en un matériau carboné poreux et sur les nanotubes de carbone verticalement alignés s'applique également à l'électrode selon la présente invention i.e. comprenant ce support et ces nanotubes de carbone.

Le pourcentage en masse de la matrice polymère conductrice d'électricité exprimée par rapport à la masse totale du composite comprenant les nanotubes de carbone et cette matrice est compris entre 10% et 90%, notamment compris entre 10% et 80%, en particulier, compris entre 40% et 70%.

Enfin, l'électrode selon l'invention possède avantageusement une capacitance d'au moins 200 mF/cm² et notamment d'au moins 230 mF/cm².

La présente invention concerne aussi l'utilisation d'une telle électrode ou susceptible d'être préparée par le procédé de l'invention comme électrode positive/négative d'un dispositif de stockage et de restitution de l'électricité tel qu'un supercondensateur ou une batterie, comme électrode pour dispositif photovoltaïque, dans les matériaux pour le stockage du CO₂ ou comme électrode pour capteurs électrochimiques. Ainsi, la présente invention concerne un dispositif comprenant une électrode selon la présente invention ou susceptible d'être préparée par le procédé de l'invention, ledit dispositif étant choisi dans le groupe constitué par un dispositif de stockage et de restitution de l'électricité tel qu'un supercondensateur ou une batterie ; un dispositif photovoltaïque ; un matériau pour le stockage du CO₂ et un capteur électrochimique.

Dans un mode de réalisation particulier, un dispositif de stockage et de restitution de l'électricité selon l'invention comprend au moins deux électrodes monocouche (positive et négative) ou bien au moins trois électrodes dont deux électrodes monocouches (positives) et une électrode double couche (négative). Pour rappel, une électrode monocouche ne comporte qu'une seule surface active, tandis qu'une électrode double couche comporte deux surfaces actives respectivement sur ses deux faces opposées.

D'autres caractéristiques et avantages de la présente invention apparaîtront encore à l'homme du métier à la lecture des exemples ci-après donnés à titre illustratif et non limitatif, en référence aux figures annexées.

### BRÈVE DESCRIPTION DES DESSINS

Les Figures 1A et 1B montrent des clichés de microscopie électronique à balayage (MEB) pris à différents grandissements d'une croissance de VACNT sur tissu de fibres de carbone obtenue selon le procédé de synthèse CVD en configuration horizontale (exemple comparatif).
La Figure 2 présente des micrographies MEB montrant : la croissance de VACNT préférentiellement sur les fibres en surface du tissu (Figures 2A et 2B) et la croissance des VACNT sur les fibres de surface mais également sur celles qui se situent dans l'épaisseur du tissu (Figure 2C).
La Figure 3 présente les courbes de voltammétrie cyclique obtenue pour le tissu en fibres de carbone non recuit durant la polymérisation du P3MT.
La Figure 4 présente les courbes de voltammétrie cyclique obtenue, durant la polymérisation du P3MT, pour le tissu en fibres de carbone doté essentiellement en surface de VACNT.
La Figure 5 présente les courbes de voltammétrie cyclique obtenue, durant la polymérisation du P3MT, pour le tissu en fibres de carbone doté en surface et dans le volume de VACNT.
La Figure 6 présente les courbes de voltammétrie cyclique pour un tissu de fibres brutes non recuites (1), un tissu en fibres de carbone doté essentiellement en surface de VACNT (2) et un tissu en fibres de carbone doté en surface et dans le volume de VACNT (3).
La Figure 7 présente les courbes de voltammétrie cyclique pour un tissu de fibres brutes non recuites, recouvert de P3MT (1'), un tissu en fibres de carbone doté essentiellement en surface de VACNT, recouvert de P3MT (2') et un tissu en fibres de carbone doté en surface et dans le volume de VACNT, recouvert de P3MT (3').

### EXPOSÉ DÉTAILLÉ DE MODES DE RÉALISATION PARTICULIERS

### I. Synthèse des VACNT.

### I.1. A la surface d'un tissu de fibres de carbone (exemple comparatif).

### Remarque préliminaire

Afin de synthétiser des VACNT uniquement à la surface d'un tissu de fibres de carbone, la technique utilisée est la technique dite « en configuration horizontale » décrite dans la demande internationale WO 2009/050247 **[8]** et mettant en œuvre le dispositif schématisé à la Figure 15 de cette même demande.

### Protocole

Aussi bien en configuration horizontale qu'en configuration verticale (cf. partie 1.2 ci-après), la synthèse des VACNT sur un tissu de fibres de carbone comporte 2 étapes se déroulant dans un même réacteur :
- dépôt d'une sous-couche de SiOx jouant le rôle de barrière de diffusion du catalyseur métallique nécessaire à la croissance des VACNT. Le précurseur organométallique à base de Si utilisé est de l'orthosilicate de tétraéthyle (TEOS). Ce dépôt a lieu à relativement basse pression et à une température modérée ;
- croissance des VACNT à partir d'un mélange de précurseurs comprenant une source catalytique et une source carbonée qui sont, dans cet exemple, un précurseur organométallique qu'est le ferrocène et un hydrocarbure liquide qu'est le toluène. Cette croissance est effectuée à pression atmosphérique.

Les conditions de synthèse sont résumées dans le Tableau 1 ci-après.

| Tableau 1 : Paramètres de synthèse de VACNT sur tissus de fibres de carbone (injection en configuration horizontale) | | |
|---|---|---|
| | Injection Toluène anhydre/TEOS | Injection Toluène/Ferrocène |
| Température de synthèse (°C) | 500 | 850 |
| Débit d'argon (L/min) | 5 | 3 |
| Pression (mbar) | 100 | 1000 |
| Masse moyenne de liquide injectée (g/min) | 0,1 | 1,06 |
| Concentration dans le mélange de précurseurs | 1mol/L de TEOS | 2,5wt% de Ferrocène |
| Durée d'injection (s) | 360 | 450 |

### Résultat

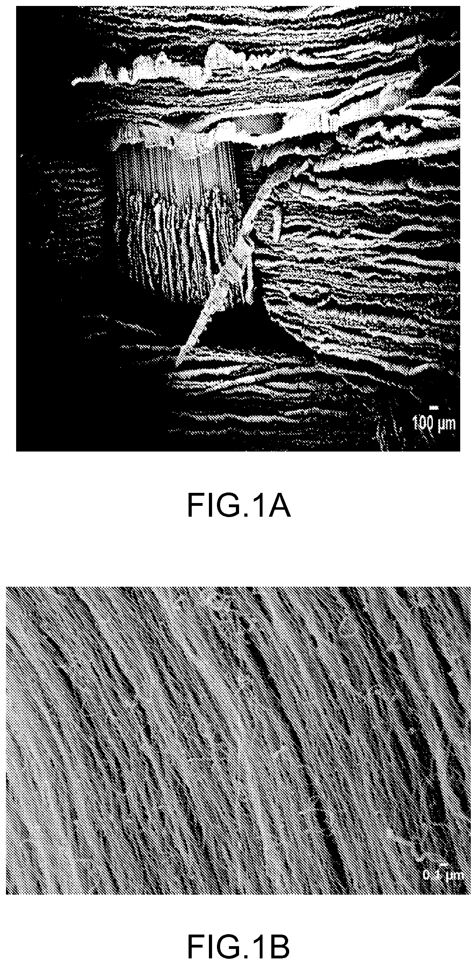

La Figure 1A présente un cliché du tissu de fibres de carbone obtenu suite au procédé de synthèse décrit ci-dessus et montre des tapis de nanotubes de carbone (NTC) alignés sur toute la surface du tissu. La Figure 1B propose un cliché à plus fort grandissement de la tranche d'un tapis de NTC déposé sur fibre montrant la présence de NTC alignés.

### I.2. A la surface et dans le volume d'un tissu de fibres de carbone.

### Dispositif mis en œuvre

Afin de synthétiser des VACNT à la surface et dans le volume d'un tissu de fibres de carbone, la technique utilisée est la technique dite « en configuration verticale ».

Cette synthèse peut utiliser les dispositifs illustrés aux Figures 1 à 3 de la demande internationale WO 2015/071408 **[9].** Elle peut également être réalisée en mettant en œuvre un dispositif modifié par rapport au dispositif schématisé à la Figure 15 de la demande internationale WO 2009/050247 **[8].**

Le dispositif modifié adapté pour une synthèse en configuration verticale est composé, comme le dispositif schématisé à la Figure 15 de la demande internationale WO 2009/050247 **[8]** (les références ci-après correspondant aux références utilisées dans cette Figure), de trois parties :
1) un système d'injection comprenant au moins un réservoir fluidiquement relié à au moins un injecteur et typiquement deux réservoirs R1 et R2 fluidiquement reliés à deux injecteurs IN1 et IN2 et permettant d'injecter les solutions liquides de précurseurs dans l'évaporateur EV sous forme de fines gouttelettes, ce dernier vaporisant les fines gouttelettes précédemment formées ;
2) un réacteur (ou chambre de réaction) CR dans lequel se trouve le support en matériau carboné poreux typiquement disposé et maintenu sur un porte-substrat tel qu'un porte-substrat en inox et dans lequel le flux de gaz porteur transporte la vapeur de précurseurs réactifs. Ce réacteur est placé dans un four FO tubulaire ou à section carrée ; et
3) un système de refroidissement et de piégeage SO pour traiter les gaz en sortie de four avant extraction.

Par contre, le dispositif modifié adapté pour une synthèse en configuration verticale se distingue du dispositif schématisé à la Figure 15 de la demande internationale WO 2009/050247 **[8]** par les deux éléments suivants :
- l'évaporateur EV est fluidiquement connecté au niveau de la partie supérieure du réacteur CR et non plus au niveau de la partie amont (i.e. de l'entrée) du réacteur moyennant quoi l'injection des fines gouttelettes se fait selon une direction essentiellement perpendiculaire (i.e. 90° ± 30°), avantageusement perpendiculaire au plan du support ;
- la pression dans le réacteur à laquelle la seconde étape du procédé i.e. le dépôt des VACNT est réalisée est inférieure à 800 mbar et non plus à la pression atmosphérique.

### Protocole

Comme précédemment expliqué, la synthèse des VACNT en configuration verticale comporte les 2 étapes se déroulant dans un même réacteur telles que définies pour le cas d'une synthèse en configuration horizontale. Les conditions de cette synthèse sont résumées dans le Tableau 2 ci-après.

| Tableau 2 : Paramètres de synthèse de VACNT sur tissus de fibres de carbone (injection en configuration verticale) | | |
|---|---|---|
| | Injection Toluène anhydre/TEOS | Injection Toluène/Ferrocène (5%) |
| Température de synthèse (°C) | 850 | 850 |
| Débit d'argon (L/min) | 5 | 3 |
| Pression (mbar) | 400 | 400 |
| Masse de liquide injectée (g/h) | 40 | 70 |
| Concentration dans le mélange de précurseur | 1 mol/L de TEOS | 5wt% de Ferrocène |
| Durée d'injection (s) | 1200 | 1500 |

### Résultat

Les Figures 2A, 2B et 2C présentent des clichés MEB des tissus de fibres de carbone recouverts de nanotubes et obtenus en configuration verticale (Figure 2C), une comparaison avec les échantillons obtenus en configuration horizontale (Figures 2A et 2B) est également présente sur ces clichés. Ainsi, il apparait clairement que la croissance en configuration horizontale engendre la formation des VACNT préférentiellement sur les fibres présentes en surface du tissu, alors qu'en configuration verticale et conjointement à un abaissement de la pression de travail dans le réacteur, les nanotubes alignés se forment à la fois sur les fibres en surface des tissus mais également sur les fibres dans l'épaisseur du tissu. Ainsi, le procédé dans sa configuration verticale et en appliquant une pression de travail plus faible que la pression atmosphérique permet d'aboutir à une croissance des VACNT dans le volume de la préforme fibreuse.

### II. Electrodépôt de P3MT et évaluation de la capacitance des électrodes produites.

Les quatre exemples suivants ont pour objectif de montrer l'intérêt de la présence de tapis de nanotubes en surface et dans le volume des tissus de fibres de carbone. En d'autres termes, il s'agit de mettre en évidence l'intérêt de la nanostructuration en surface et dans le volume des tissus de fibres de carbone sur le dépôt du polymère conducteur et la capacitance développée par les électrodes ainsi produites.

Pour cela, tous les essais ont été réalisés à quantité de charge constante, à savoir 2 C, afin de pouvoir comparer les différentes configurations en termes de valeurs de capacitances obtenues.

### II.1. Electrodépôt de P3MT sur tissu de fibres de carbone brutes et évaluation de la capacitance (exemple comparatif).

Il s'agit ici d'estimer la possibilité de dépôt de polymère conducteur à la surface de tissus de fibres brutes de synthèse, c'est-à-dire de fibres recouvertes d'une couche organique d'ensimage, nécessaire à la manipulation des tissus de fibres de carbone et bien connue du milieu aéronautique.

L'échantillon de fibres de carbone brutes a subi une électrodéposition en voltammétrie cyclique (-0,5 V à 1,6 V à 20 mV.s⁻¹, dans un mélange équivolumique de EMITFSI/CH₃CN contenant 0,4 M de monomère 3-méthylthiophène). Afin d'atteindre une quantité de charges (Qp) de 2 C, 100 cycles de polymérisation ont été appliqués, mais, il s'est avéré difficile d'atteindre la charge de 2 C envisagée, la quantité de charge plafonnant à 1,75 C (Figure 3). Ceci s'explique par un effet résistif prononcé du tissu et par une surface développée par le tissu qui reste limitée.

### II.2. Electrodépôt de P3MT sur tissu de fibres de carbone recuites et recouvertes de SiOx et évaluation de la capacitance (exemple comparatif).

Pour cet essai, les fibres de carbone ont été recuites sous flux d'argon à 3 L.min⁻¹ et à 850°C puis ont été recouvertes de SiOx conformément à la première étape du procédé selon l'invention (cf. Tableau 2).

Dans ce cas, il s'est avéré que le dépôt de P3MT était impossible en raison d'un comportement trop résistif s'expliquant par la présence d'une pellicule de SiOx isolante à la surface des fibres.

### II.3. Electrodépôt de P3MT sur VACNT se répartissant essentiellement sur les fibres disposées en surface du tissu de fibres de carbone et évaluation de la capacitance (exemple comparatif).

Sur cet échantillon, les VACNT sont principalement répartis à la surface des fibres par mise en œuvre d'un procédé de synthèse en configuration horizontale. Ainsi, les fibres dans le volume du tissu ne comportent pas de VACNT et leur surface est donc essentiellement constituée d'une couche de SiOx. La nanostructuration de la surface du tissu de fibres de carbone permet donc une légère augmentation de la surface active disponible pour le dépôt de P3MT, mais les fibres présentes dans le volume sont inactives compte tenu de leur surface recouverte de SiOx.

Cet échantillon de VACNT supportés sur tissu de fibres de carbone a subi une électrodéposition en voltammétrie cyclique (-0,5 V à 1,6 V à 20 mV.s⁻¹, dans un mélange équivolumique de EMI-TFSI/CH₃CN contenant 0,4 M de monomère 3-méthylthiophène) de 38 cycles de dépôt pour obtenir une charge Qp = 2,14 C (Figure 4). Le dépôt de P3MT est alors possible, mais seulement sur les nanotubes de carbone présents sur les fibres de la surface du tissu, les fibres recouvertes de SiOx dans le volume du tissu étant trop résistives pour permettre le dépôt du PCE.

### II.4. Electrodépôt de P3MT sur VACNT se répartissant à la fois sur les fibres disposées en surface et dans le volume du tissu de fibres de carbone et évaluation de la capacitance.

Sur cet échantillon, les VACNT sont répartis sur les fibres qui se trouvent à la fois en surface et dans le volume du tissu de fibres de carbone par mise en œuvre du procédé de l'invention. La surface développée active par les VACNT est donc plus élevée que celle des fibres nues ou recouvertes de SiOx, et la plupart des fibres constituant le tissu sont recouvertes de VACNT. Cet échantillon de VACNT supportés sur tissu de fibres de carbone a subi une électrodéposition en voltammétrie cyclique (-0,5 V à 1,6 V à 20 mV.s⁻¹, dans un mélange équivolumique de EMI-TFSI/CH₃CN contenant 0,4 M de monomère 3-méthylthiophène) de 24 cycles de dépôt pour obtenir une charge Qp = 2,05 C (Figure 5). Le dépôt de P3MT est alors possible, et au regard du signal électrochimique, l'ensemble des nanotubes de carbone présents à la surface et dans le volume du tissu fibreux semble avoir été recouvert par le P3MT.

### III. Comparaison en fonction des différentes configurations de nanotubes supportés sur tissus de fibres de carbone et des conditions électrochimiques.

L'ensemble des résultats présentés pour différentes configurations de nanotubes supportés sur tissus de fibres de carbone et de conditions électrochimiques permet d'établir des points de comparaison en termes de performances et notamment concernant la capacitance surfacique.

### III.1. Comparaison 1 : électrodes avec seulement le tapis de nanotubes supportés sur tissus de fibres de carbone (sans PCE).

Comme la capacitance d'une électrode sans P3MT est indirectement proportionnelle à la surface active de l'électrode, la comparaison des capacitances des électrodes dans les mêmes conditions électrochimiques est un bon indicateur comparatif des surfaces actives de chaque type d'électrode.

Ainsi, pour une même surface géométrique de l'électrode, la caractérisation électrochimique a été réalisée en voltammétrie cyclique (-0,5 V à 1,6 V à 20 mV.s⁻¹, dans un mélange équivolumique de EMI-TFSI/CH₃CN).

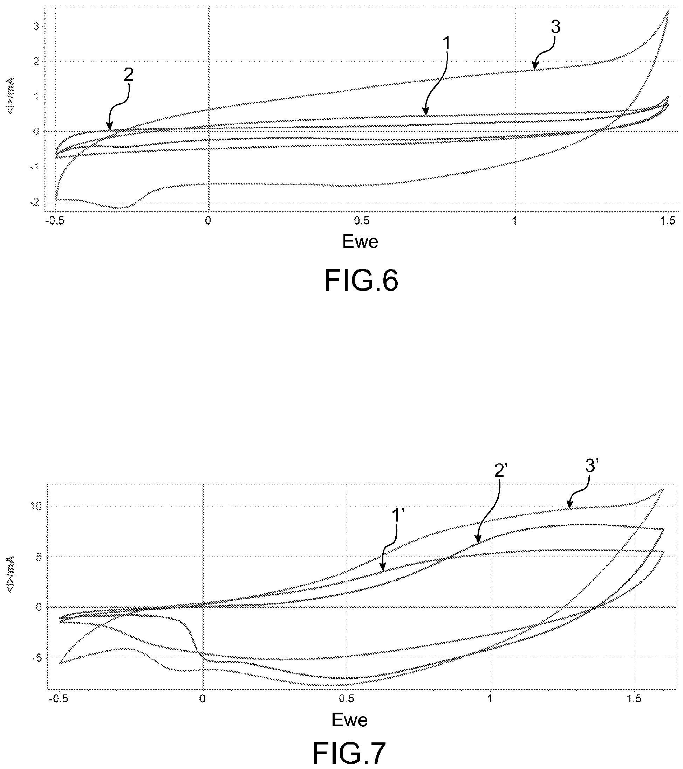

Le Tableau 3 ci-dessous reporte les capacitances surfaciques en décharge pour chaque électrode dans les mêmes conditions électrochimiques, et la Figure 6 reporte les voltamogrammes réalisés dans les conditions d'analyse.

**Tableau 3**

| | Csd / mF.cm-2 |
|---|---|
| Tissu de fibres brutes avec ensimage (non recuites) | 22 |
| Tissu de fibres / VACNT (en surface) | 14 |
| Tissu de fibres / VACNT (en surface et dans le volume) | 79 |

Ces résultats mettent en évidence l'effet très marqué de la présence de nanotubes dans le volume de la préforme fibreuse qui s'explique par une augmentation de la surface active disponible. Il est également important de noter que la capacitance du tissu contenant des VACNT localisés seulement sur les fibres en surface est plus faible que celle du tissu brut. Cela s'explique par le fait que les fibres qui se trouvent dans le volume sont partiellement recouvertes d'une sous-couche résistive de SiOx qui bloque la réponse électrochimique de la fibre recouverte de l'oxyde.

### III.2. Comparaison 2 : électrodes composées de VACNT supportés sur tissus de fibres de carbone et recouverts de P3MT.

Le dépôt de P3MT est réalisé pour une même quantité de charge de polymérisation (Qp ~ 2 C) et les propriétés de stockage des électrodes sont comparées à surface géométrique équivalente.

Le Tableau 4 ci-dessous reporte les capacitances surfaciques en décharge pour chaque électrode dans les mêmes conditions électrochimiques et s'appuie sur les exemples des points II.1, II.3 et II.4 tels que précédemment décrits. La Figure 7 reporte les voltamogrammes réalisés dans les conditions d'analyse.

**Tableau 4**

| | Electrodéposition de P3MT Voltammétrie cyclique -0.5 V à 1.6 V | | Capacitance surfacique |
|---|---|---|---|
| | Qp / C | Nombre de cycles | Csd / mF.cm-2 |
| Tissu de fibres brutes non recuites | 1,75 | 100 | 145 |
| Tissu de fibres / VACNT (en surface) | 2,14 | 38 | 172 |
| Tissu de fibres / VACNT (en surface et dans le volume) | 2,05 | 24 | 241 |

Pour une quantité de charge de polymérisation quasi identique (Qp ~ 2C), l'électrode développant la plus grande surface active (fibres / VACNT en surface et dans le volume) montre la plus forte capacitance spécifique, et seulement 24 cycles sont nécessaires pour obtenir la quantité de charges de 2 C. Ces résultats mettent bien en évidence le rôle important des nanotubes localisés en surface et en volume : la nanostructuration du P3MT via les VACNT présents sur les fibres à la fois en surface et dans le volume du tissu permet d'améliorer significativement les performances de l'électrode à base de fibres de carbone.

Ainsi, on constate une augmentation de 40% de la capacitance du tissu comportant des fibres recouvertes de VACNT en surface et dans le volume de la préforme fibreuse comparativement à la préforme comportant seulement les fibres de surface recouvertes de VACNT. L'augmentation est encore plus importante (66%) si on compare au tissu brut sans nanotube.

### REFERENCES BIBLIOGRAPHIQUES

**[1]** Ma et al, 2016, « Asymmetric hybrid capacitors based on novel bearded carbon fiber cloth-pinhole polyaniline electrodes with excellent energy density », RSC Adv., vol. 6, pages 82995-83002.
**[2]** Zhao et al, 2016 « Vapor-phase polymerization of poly(3,4-ethylenedioxythiophene) nanofibers on carbon cloth as electrodes for flexible supercapacitors », Nanotechnology, vol. 27.
**[3]** Ye et al, 2017, « Morphology controlled MnO2 electrodeposited on carbon fiber paper for high-performance supercapacitors », J. Power Sources, vol. 351, pages 51-57.
**[4]** Hsu et al, 2017, « High-cell-voltage supercapacitor of carbon nanotube/carbon cloth operating in neutral aqueous solution », J. Materials Science, vol. 22, pages 3383-3387.
**[5]** Hiremath et al, 2017, « Recent developments in carbon fibers and carbon nanotube-based fibers: a review », Polymer Reviews, vol. 57, pages 339-368.
**[6]** Pozegic et al, 2016, « Multi-functionnal carbon fibre composites using carbon nanotubes as an alternative to polymer sizing », Scientific Reports, vol. 6, Article number 37334.
**[7]** Lv et al, 2012, « Vertically aligned carbon nanotubes grown on carbon fabric with high rate capability for super-capacitors », Synthetic Metals, vol. 162, pages 1090-1096.
**[8]** Demande internationale WO 2009/103925 au nom du CEA publiée le 27 août 2009.
**[9]** Demande internationale WO 2015/07148 au nom du CEA publiée le 21 mai 2015.
**[10]** Li et Chen, 2017, « Polyaniline/carbon nanotubes-decorated activated carbon fiber felt as high-performance, free-standing and flexible supercapacitor electrodes », J. Mater. Sci., vol. 52, pages 12348-12357.
**[11]** Yesi et al, 2016, « Directly-grown hierarchical carbon nanotube polypyrrole core-shell hybrid for high-performance flexible supercapacitors », Chem Sus Chem, vol. 6, pages 370-378.
**[12]** Demande de brevet CN 102354612 au nom de University of Tianjin publiée le 15 février 2012.
**[13]** Demande de brevet US 2003/077515 au nom de Chen et al publiée le 24 avril 2003.
**[14]** Demande internationale WO 2012/004317 aux noms du CEA, Université François Rabelais & Université de Cergy Pontoise publiée le 12 janvier 2012.
**[15]** Demande internationale WO 2008/016990 au nom de Ada Technologies publiée le 7 février 2008.

## Revendications

1. Procédé pour doter un support en un matériau carboné poreux avec des nanotubes de carbone verticalement alignés,
ledit procédé présentant une première étape de dépôt d'une sous-couche de céramique sur ledit support, ladite sous-couche de céramique étant soit en céramique oxyde choisie dans le groupe constitué par de l'oxyde de silicium (SiOₓ avec 0<x ≤2), de l'oxyde d'aluminium (Al₂O₃), de l'oxyde de zirconium (ZrO₂) et de l'oxyde de titane (TiO₂) soit en céramique non oxyde choisie dans le groupe constitué par du carbure de silicium (SiC), du carbonitrure de silicium (SiCN), du nitrure d'aluminium (AIN), du nitrure de titane (TiN), de l'oxynitrure de silicium (SiON) et de l'oxycarbonitrure de silicium (SiOCN),
suivie d'une deuxième étape de synthèse, par dépôt chimique catalytique en phase vapeur, desdits nanotubes de carbone verticalement alignés sur le support obtenu suite à la première étape, ladite synthèse étant effectuée en présence de précurseurs que sont une source catalytique choisie parmi les métallocènes de métal de transition et une source de carbone choisie parmi les hydrocarbures, les alcools, le monoxyde de carbone, les halogénures de carbone, le toluène, le cyclohexane, les huiles d'origine végétale, la benzylamine, l'acétonitrile, l'éthylènediamine, le dicyanopentane, l'éthylène, l'acétylène, le xylène, le méthane et l'un quelconque de leurs mélanges,
**caractérisé en ce que** les précurseurs de la sous-couche de céramique sont injectés dans une direction sensiblement perpendiculaire au plan du support,
**en ce que** la source de carbone nécessaire à la synthèse lors de cette deuxième étape est injectée dans une direction sensiblement perpendiculaire au plan du support et à une pression comprise entre 3.10⁴ Pa (300 mbar) et 6.10⁴ Pa (600 mbar),
**en ce que** ledit support en un matériau carboné poreux se présente sous forme d'un tissu de fibres de carbone,
**en ce que** ladite direction d'injection et ledit plan du support forment un angle compris entre 60° et 120° et
**en ce que** ladite première étape et ladite deuxième étape sont réalisées à la même pression et à la même température, ladite température étant comprise entre 500°C et 1100°C.

2. Procédé selon la revendication 1, **caractérisé en ce que** ladite céramique est une céramique oxyde et notamment de l'oxyde de silicium SiOₓ avec 0<x≤2.

3. Procédé selon la revendication 1 ou 2, **caractérisé en ce que** ladite source de carbone est co-injectée avec la source catalytique nécessaire à la synthèse lors ladite deuxième étape.

4. Procédé selon la revendication 3, **caractérisé en ce que** la source catalytique sous forme de ferrocène est co-injectée avec la source de carbone se présentant sous forme d'une solution de toluène mise sous forme d'aérosol.

5. Procédé selon l'une quelconque des revendications 1 à 4, **caractérisé en ce que** ladite première étape et ladite deuxième étape sont réalisées dans une même chambre de réaction.

6. Procédé selon l'une quelconque des revendications 1 à 4, **caractérisé en ce que** ladite première étape et ladite deuxième étape sont réalisées respectivement dans une première chambre dite « chambre de pré-traitement » et dans une deuxième chambre dite « chambre de réaction ».

7. Support doté de nanotubes de carbone verticalement alignés obtenu suite à un procédé tel que défini dans l'une quelconque des revendications 1 à 6.

8. Procédé pour la préparation d'une électrode comprenant un support en un matériau carboné poreux, des nanotubes de carbone verticalement alignés et une matrice polymère conductrice de l'électricité, ledit procédé comprenant les étapes successives suivantes :
a) doter un support en un matériau carboné poreux avec des tapis de nanotubes de carbone verticalement alignés selon un procédé tel que défini dans l'une quelconque des revendications 1 à 6 ;
b) déposer électrochimiquement ladite matrice polymère sur lesdits nanotubes de carbone à partir d'une solution électrolytique comprenant au moins un monomère précurseur de ladite matrice.

9. Procédé selon la revendication 8, **caractérisé en ce que**, suite à ladite étape (a) et préalablement à ladite étape (b), les nanotubes de carbone verticalement alignés sont soumis à un traitement ou pré-traitement oxydant.

10. Procédé selon la revendication 8 ou 9, **caractérisé en ce que** ledit procédé de dépôt par voie électrochimique se fait par une méthode cyclique et/ou une méthode galvanostatique pulsée ou continue et/ou une méthode potentiostatique pulsée ou continue.

11. Procédé selon l'une quelconque des revendications 8 à 10, **caractérisé en ce que**, suite à ladite étape (b), le procédé présente une étape de rinçage et éventuellement une étape de séchage.

12. Electrode préparée par un procédé tel que défini dans l'une quelconque des revendications 8 à 11.

13. Utilisation d'une électrode selon la revendication 12 comme électrode positive/négative d'un dispositif de stockage et de restitution de l'électricité tel qu'un supercondensateur ou une batterie, comme électrode pour dispositif photovoltaïque, dans les matériaux pour le stockage du CO₂ ou comme électrode pour capteurs électrochimiques.

## Patentansprüche

1. Verfahren zur Bestückung eines Trägers aus einem porösen Kohlenstoffmaterial mit vertikal ausgerichteten Kohlenstoffnanoröhrchen,
das Verfahren mit einem ersten Schritt der Abscheidung einer Keramikunterschicht auf dem Träger, wobei die Keramikunterschicht entweder aus einer Keramikoxidgruppe besteht, die aus Siliziumoxid (SiOₓ mit 0<x ≤2), Aluminiumoxid (Al₂O₃), Zirkonoxid (ZrO₂ ) und Titanoxid (TiO₂) ausgewählt ist, oder aus einer Nichtoxidkeramik, die aus der Gruppe besteht, die aus Siliziumkarbid (SiC), Siliziumkarbonitrit (SiCN), Aluminiumnitrid (AIN), Titannitrid (TiN), Siliziumoxynitrid (SiON) und Siliziumoxycarbonitrit (SiOCN) ausgewählt ist,
gefolgt von einem zweiten Syntheseschritt durch katalytische Abscheidung in der Dampfphase der genannten Kohlenstoffnanoröhrchen, die vertikal auf dem Träger ausgerichtet sind, der nach dem ersten Schritt erhalten wurde, wobei die genannte Synthese in Gegenwart von Vorläufern durchgeführt wird, bei denen es sich um eine katalytische Quelle, die unter den Übergangsmetall-Metallocenen ausgewählt ist, und eine Kohlenstoffquelle, die unter den Kohlenwasserstoffen, Alkoholen, Kohlenmonoxid, Kohlenstoffhalogeniden, Toluol, Cyclohexan, Ölen pflanzlichen Ursprungs, Benzylamin, Acetonitril, Ethylendiamin, Dicyanopentan, Ethylen, Acetylen, Xylol, Methan und beliebigen Gemischen davon ausgewählt ist, handelt,
**dadurch gekennzeichnet, dass** die Vorläufer der Keramikunterlage in eine Richtung im Wesentlichen senkrecht zur Trägerebene eingespritzt werden,
dass die für die Synthese in diesem zweiten Schritt erforderliche Kohlenstoffquelle in eine Richtung eingespritzt wird, die im Wesentlichen rechtwinklig zur Trägerebene liegt, und der Druck zwischen 3,10⁴ Pa (300 mbar) und 6,10⁴ Pa (600 mbar) liegt,
dass der Träger aus einem porösen Kohlenstoffmaterial in Form eines Kohlenstofffasergewebes vorliegt,
dass die Einspritzrichtung und die Trägerebene einen Winkel zwischen 60° und 120° bilden und
dass der erste Schritt und der zweite Schritt bei demselben Druck und der gleichen Temperatur durchgeführt werden, wobei die Temperatur zwischen 500°C und 1 100°C liegt.

2. Verfahren nach Anspruch 1, **dadurch gekennzeichnet, dass** die Keramik ein Keramikoxid und insbesondere Siliziumoxid SiOₓ mit 0<x≤2 ist.

3. Verfahren nach Anspruch 1 oder 2, **dadurch gekennzeichnet, dass** die Kohlenstoffquelle mit der für die Synthese erforderlichen katalytischen Quelle im zweiten Schritt mit eingespritzt wird.

4. Verfahren nach Anspruch 3, **dadurch gekennzeichnet, dass** die katalytische Quelle in Form von Ferrocen gemeinsam mit der Kohlenstoffquelle in Form einer Toluollösung aerosolisierten eingespritzt wird.

5. Verfahren nach einem der Ansprüche 1 bis 4, **dadurch gekennzeichnet, dass** der erste Schritt und der zweite Schritt in derselben Reaktionskammer durchgeführt werden.

6. Verfahren nach einem der Ansprüche 1 bis 4, **dadurch gekennzeichnet, dass** der erste Schritt und der zweite Schritt jeweils in einer ersten Kammer, der sogenannten "Vorbehandlungskammer", und in einer zweiten Kammer, der sogenannten "Reaktionskammer", durchgeführt werden.

7. Träger mit vertikal ausgerichteten Kohlenstoffnanoröhrchen, die nach einem Verfahren gemäß einem der Ansprüche 1 bis 6 erhalten wurden.

8. Verfahren zur Vorbereitung einer Elektrode, umfassend einen Träger aus einem porösen Kohlenstoffmaterial, vertikal ausgerichtete Kohlenstoffnanoröhrchen und eine elektrisch leitende Polymermatrix, wobei das Verfahren die folgenden aufeinanderfolgenden Schritte umfasst:
a) einen Träger aus einem porösen Kohlenstoffmaterial mit vertikal ausgerichteten Kohlenstoffnanoröhrchenmatten nach einem Verfahren gemäß einem der Ansprüche 1 bis 6 ausstatten;
b) elektrochemisches Absetzen der Polymermatrix auf den Kohlenstoffnanoröhrchen aus einer Elektrolytlösung, die mindestens ein Vorläufermonomer der Matrix umfasst.

9. Verfahren nach Anspruch 8, **dadurch gekennzeichnet, dass** nach dem Schritt (a) und vor dem Schritt (b) die vertikal ausgerichteten Kohlenstoffnanoröhrchen einer oxidativen Behandlung oder Vorbehandlung unterzogen werden.

10. Verfahren nach Anspruch 8 oder 9, **dadurch gekennzeichnet, dass** das elektrochemische Abscheideverfahren durch ein zyklisches Verfahren und/oder ein pulsierendes oder kontinuierliches galvanostatisches Verfahren und/oder ein pulsierendes oder kontinuierliches potentiostatisches Verfahren erfolgt.

11. Verfahren nach einem der Ansprüche 8 bis 10, **dadurch gekennzeichnet, dass** das Verfahren nach dem genannten Schritt (b) einen Spülschritt und gegebenenfalls einen Trocknungsschritt aufweist.

12. Elektrode, die durch ein Verfahren gemäß einem der Ansprüche 8 bis 11 vorbereitet wird.

13. Verwendung einer Elektrode nach Anspruch 12 als positive/negative Elektrode einer Stromspeicher- und -ausgabevorrichtung wie einem Superkondensator oder einer Batterie, als Elektrode für eine Photovoltaik-Vorrichtung, in Materialien zur Speicherung von CO₂ oder als Elektrode für elektrochemische Sensoren.

## Claims

1. Method for providing a substrate made of a porous carbon material with vertically aligned carbon nanotubes,
said method comprising a first step of depositing a ceramic sublayer on said substrate, said ceramic sublayer being either made of an oxide ceramic chosen from the group consisting of silicon oxide (SiOₓ with 0<x ≤2), aluminum oxide (Al₂O₃), zirconium oxide (ZrO₂) and titanium oxide (TiO₂) or made of a non-oxide ceramic chosen from the group consisting of silicon carbide (SiC), silicon carbonitride (SiCN), aluminum nitride (AIN), titanium nitride (TiN), silicon oxynitride (SiON) and silicon oxycarbonitride (SiOCN),
followed by a second step of synthesis, by catalytic chemical vapor deposition, of said vertically aligned carbon nanotubes on the support obtained after the first step, said synthesis being carried out in the presence of precursors consisting of a catalytic source chosen from transition metal metallocenes and a carbon source chosen from hydrocarbons, alcohols, carbon monoxide, carbon halides, toluene, cyclohexane, vegetable oils, benzylamine, acetonitrile, ethylenediamine, dicyanopentane, ethylene, acetylene, xylene, methane and any mixtures thereof,
**characterized in that** the precursors of the ceramic sublayer are injected in a direction substantially perpendicular to the plane of the substrate,
**in that** the carbon source required for the synthesis during said second step is injected in a direction substantially perpendicular to the plane of the substrate and at a pressure between 3.10⁴ Pa (300 mbar) and 6.10⁴ Pa (600 mbar),
**in that** said substrate made of a porous carbon material is in the form of a carbon fibre fabric,
**in that** said injection direction and said plane of the substrate form an angle of between 60° and 120° and
**in that** said first step and said second step are carried out at the same pressure and at the same temperature, said temperature being between 500°C and 1100°C.

2. Method according to claim 1, **characterized in that** said ceramic is an oxide ceramic and in particular SiOₓ silicon oxide with 0<x≤2.

3. Method according to claim 1 or 2, **characterized in that** said carbon source is co-injected with the catalytic source necessary for the synthesis during said second step.

4. Method according to claim 3, **characterized in that** the catalytic source in the form of ferrocene is co-injected with the carbon source in the form of a toluene solution in aerosol form.

5. Method according to any one of claims 1 to 4, **characterized in that** said first step and said second step are carried out in the same reaction chamber.

6. Method according to any one of claims 1 to 4, **characterized in that** said first step and said second step are carried out respectively in a first chamber referred to "pretreatment chamber" and in a second chamber referred to "reaction chamber".

7. Support provided with vertically aligned carbon nanotubes obtained by a method as defined in any one of claims 1 to 6.

8. Method for preparing an electrode comprising a substrate made of a porous carbon material, vertically aligned carbon nanotubes and an electrically conductive polymer matrix, said method comprising the following successive steps:
a) providing a substrate made of a porous carbon material with mats of vertically aligned carbon nanotubes according to a method as defined in any one of claims 1 to 6;
b) electrochemically depositing said polymer matrix on said carbon nanotubes from an electrolytic solution comprising at least one monomer precursor of said matrix.

9. Method according to claim 8, **characterized in that**, after said step (a) and prior to said step (b), the vertically aligned carbon nanotubes are subjected to an oxidizing treatment or pre-treatment.

10. Method according to claim 8 or 9, **characterized in that** said electrochemical deposition method is carried out by a cyclic method and/or a pulsed or continuous galvanostatic method and/or a pulsed or continuous potentiostatic method.

11. Method according to any one of claims 8 to 10, **characterized in that**, after said step (b), the method has a rinsing step and optionally a drying step.

12. Electrode prepared by a method as defined in any one of claims 8 to 11.

13. Use of an electrode according to claim 12 as a positive/negative electrode of a device for storing and returning electricity such as a supercapacitor or a battery, as an electrode for a photovoltaic device, in materials for storing CO₂ or as an electrode for electrochemical sensors.
